(19) **Europäisches Patentamt / European Patent Office / Office européen des brevets**

(11) **EP 3 384 092 B1**

(12) **FASCICULE DE BREVET EUROPEEN**

(45) Date de publication et mention
de la délivrance du brevet:
**01.05.2019 Bulletin 2019/18**

(21) Numéro de dépôt: **15813088.0**

(22) Date de dépôt: **03.12.2015**

(51) Int Cl.:
**E02B 9/00** *(2006.01)*　　**E02B 17/02** *(2006.01)*

(86) Numéro de dépôt international:
**PCT/FR2015/053318**

(87) Numéro de publication internationale:
**WO 2017/093617 (08.06.2017 Gazette 2017/23)**

(54) **PROCEDE DE MISE EN PLACE ET DE RETRAIT D'UNE BASE PORTEUSE**

VERFAHREN ZUM INSTALLIEREN UND ENTFERNEN EINER TRÄGERBASIS

METHOD FOR INSTALLING AND REMOVING A CARRIER BASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**10.10.2018 Bulletin 2018/41**

(73) Titulaire: **Guinard Energies Sarl**
**29200 Brest (FR)**

(72) Inventeur: **MERMIER, Laurent**
**44100 Nantes (FR)**

(74) Mandataire: **Regimbeau**
**20, rue de Chazelles**
**75847 Paris Cedex 17 (FR)**

(56) Documents cités:
**WO-A1-86/06339　　GB-A- 819 857**
**US-A- 3 496 897**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

L'invention concerne un procédé d'immersion et un procédé d'émersion d'un dispositif adapté pour porter au moins un équipement destiné à être déposé sur un fond marin, tel qu'une hydrolienne par exemple. L'invention concerne également un dispositif adapté pour mettre en oeuvre de tels procédés.

**ETAT DE LA TECHNIQUE**

Pour la production d'énergie ou pour divers travaux sous-marins, il est parfois nécessaire d'installer des équipements sur les fonds marins. Les fonds marins peuvent être par exemple ceux de la mer, d'un océan, d'un lac ou encore d'un cours d'eau.

La mise en place et le retrait de ces équipements sont souvent effectués par des navires de manutention spécialisés mais ces derniers sont complexes, onéreux et peu disponibles.

En outre, les conditions parfois sévères d'environnement (courants, météo, houle, etc.) complexifient les opérations de mise en place et de retrait.

Des méthodes utilisant des bases flottantes sur lesquelles sont disposés les équipements ont été décrites dans l'art antérieur.

Généralement, l'équipement est tracté grâce à la base flottante jusqu'au lieu d'installation puis l'ensemble base flottante-équipement est coulé en remplissant un compartiment de la base avec de l'eau.

Cependant, à mesure que l'immersion progresse, la stabilité hydrostatique de la base et de l'équipement diminue jusqu'à ce que la surface de flottaison disparaisse, ce qui annule le rayon métacentrique (rayon de l'arc de cercle défini par un déplacement du centre de carène de l'ensemble comprenant la base et l'équipement). Le danger de chavirage est alors élevé.

Pour y remédier, il serait possible d'alourdir la base pour maintenir le centre de gravité sous le centre de carène mais cette solution n'est pas réalisable en pratique : elle conduit en effet à une masse de la base trop importante, à des volumes surélevés et à un fort tirant d'eau.

**RESUME DE L'INVENTION**

Un but de l'invention est de pouvoir installer et enlever des équipements sur les fonds marins de manière stable, sécurisée et moins onéreuse, y compris dans des zones de fort courant.

Pour cela, l'invention propose un procédé de mise en place sur un fond marin d'un dispositif portant au moins un équipement, le dispositif comprenant :

- une première et une deuxième bases solidaires entre elles et formant deux espaces de flottaison indépendants,

- des orifices d'entrées/sorties d'eau/d'air et des moyens de commandes permettant de contrôler les flux d'eau et d'air à l'intérieur des espaces de flottaison,
  au moins une des deux bases portant l'équipement,

- le procédé comprenant une étape de remplissage de la deuxième base avec de l'eau, la première base, émergée et en flottaison à la surface, stabilisant le dispositif pendant la coulée de la deuxième base remplie d'eau jusqu'au contact avec le fond marin, et comprenant une étape de remplissage de la première base avec de l'eau, la deuxième base étant en contact avec le fond marin et stabilisant dispositif pendant la coulée de la première base jusqu'au fond marin,

dans lequel le dispositif vérifie les conditions suivantes, au moment où la seconde base étant posée sur le fond, la première base (ou éventuellement la base et l'équipement) s'immerge complètement :

$$P1 \left[ A \cdot (z_{G1}-z_{B1}) + (y_{G1}- y_{B1}) \right] < Pim2 \, (y_{L21} - y_{R2})$$

et

$$P1 \left[ A \cdot (z_{G1}-z_{B1}) - (y_{G1}-y_{B1}) \right] < Pim2 \, (y_{R2} - y_{L22})$$

Avec A égal à 0,12,
où, pour un repère cartésien direct XYZ et les coordonnées d'un point quelconque M étant notées par $x_M$, $y_M$, $z_M$,:

- G1 le centre d'inertie (ou de gravité dans le cas présent) des masses d'un premier groupe défini par la première base, l'équipement, et y compris l'eau à l'intérieur de la première base, la position de G1 étant corrigée des effets des carènes liquides,
- $\overrightarrow{P1}$ le poids émergé du premier groupe dans l'air, de valeur P1,
- B1 est le centre de poussée hydrostatique du premier groupe,
- R2 est le centre d'application du poids immergé, de valeur Pim2, du second groupe, c'est-à-dire de la résultante du poids $\overrightarrow{P2}$ du second groupe et de la poussé hydrostatique du second groupe,
- L21 et L22 sont les points latéraux d'appui de la deuxième base 12 sur le fond, dans le cas où l'inclinaison se fait selon l'axe longitudinal X-X', avec $y_{L21} > y_{L22}$, la largeur étant donc supérieure ou égale à la différence $y_{L21}$-$y_{L22}$.

En effet, un tel procédé de mise en place permet d'installer un équipement sur un fond marin tout en assurant la stabilité de l'ensemble à chaque étape du procédé. La base émergée en flottaison stabilise l'ensemble pendant la coulée de l'autre base. Un tel procédé a l'avantage d'être rapide et d'être adaptable dans tout type de site d'installation (fort courant, peu profond, etc.). La valeur de A à 0,12° correspond à une gîte de 6 degrés.

Alternativement, A est égal à 0,21 ou égal à 0,052 ou égal à 0,087, ce qui correspond respectivement à des angles de gîte de 12 ou 3 ou 5 degrés.

Avantageusement, le procédé de mise en place présente les caractéristiques suivantes, prises seules ou en combinaison :

- étape supplémentaire de désolidarisation des deux bases, une fois qu'au moins l'une des deux bases est au contact du fond marin,

- étape durant laquelle la base au contact du fond marin est attachée au fond marin par des moyens d'ancrage.

- l'inclinaison du dispositif par rapport à la surface de l'eau ne dépasse pas un angle d'inclinaison maximal prédéterminé, ledit angle maximal étant inférieur à 70°, de préférence inférieur ou égal à 50° pendant l'immersion ou l'émersion des bases.

D'une façon complémentaire au procédé de mise en place, l'invention propose un procédé de retrait d'un fond marin d'un dispositif portant un équipement, ledit dispositif comprenant :

- une première et une deuxième bases solidaires entre elles et formant deux espaces de flottaison indépendants,
- des orifices d'entrées/sorties d'eau/d'air et des moyens de commandes permettant de contrôler les flux d'eau et d'air à l'intérieur des espaces de flottaison,
- au moins une des deux bases portant l'équipement,
  le procédé comprenant une étape de vidange de l'eau contenue dans la première base avec de l'air, la deuxième base, en contact avec le fond marin, stabilisant le dispositif pendant la remontée de la première base jusqu'à la surface et comprenant une étape de vidange de l'eau contenue dans la base au contact du fond marin avec de l'air, la base deuxième émergée et en flottaison à la surface stabilisant le dispositif pendant la remontée de la première base jusqu'à la surface,

dans lequel le dispositif vérifie les conditions suivantes au moment où la deuxième base est au contact du fond marin et la première base commence à émerger:

$$P1 \left[ A \cdot (z_{G1}\text{-}z_{B1}) + (y_{G1}\text{-} y_{B1}) \right] < Pim2 (y_{L21} - y_{R2})$$

et

$$P1 \left[ A \cdot (z_{G1}\text{-}z_{B1}) - (y_{G1}\text{-}y_{B1}) \right] < Pim2 (y_{R2} - y_{L22})$$

Avec A égal à 0,12,
où, pour un repère cartésien direct XYZ et les coordonnées d'un point quelconque M étant notées par $x_M$, $y_M$, $z_M$:

- G1 le centre d'inertie (ou de gravité dans le cas présent) des masses d'un premier groupe (N1) défini par la première base (11), l'équipement, et y compris l'eau à l'intérieur de la première base, la position de G1 étant corrigée des effets des carènes liquides,
- $\overrightarrow{P1}$ le poids émergé du premier groupe dans l'air, de valeur P1,
- B1 est le centre de poussée hydrostatique du premier groupe,
- R2 est le centre d'application du poids immergé, de valeur Pim2, du second groupe, c'est-à-dire de la résultante du poids $\overrightarrow{P2}$ du second group et de la poussé hydrostatique du second ensemble,
- L21 et L22 sont les points latéraux d'appui de la deuxième base 12 sur le fond dans le cas où l'inclinaison se fait selon l'axe longitudinal X-X', avec $y_{L21} > y_{L22}$, la largeur étant donc supérieure ou égale à la différence $y_{L21}$-$y_{L22}$.

Un tel procédé de retrait offre des avantages similaires au procédé d'installation.

En effet, un tel procédé de retrait permet de retirer un équipement du fond marin tout en assurant la stabilité de l'ensemble. La base émergée en flottaison stabilise l'ensemble pendant la remontée de l'autre base au contact du fond marin.

Alternativement, A est égal à 0,21 ou encore 0,052 ou encore 0,087, ce qui correspond respectivement à des angles de gîte de 12 ou 3 ou 5 degrés.

Avantageusement, le procédé de retrait comprend les caractéristiques suivantes, prises seules ou en combinaison :

- l'inclinaison du dispositif par rapport à la surface de l'eau ne dépasse pas un angle d'inclinaison maximal prédéterminé, ledit angle maximal étant inférieur à 70°, de préférence inférieur ou égal à 50° pendant l'immersion ou l'émersion des bases.

En outre, les deux procédés précédents peuvent particulièrement permettre l'immersion et l'émersion d'un équipement qui est une hydrolienne.

L'invention propose aussi un dispositif porteur particulièrement adapté pour être installé et retiré selon les procédés précédemment décrits.

Pour cela, l'invention propose un dispositif porteur adapté pour porter au moins un équipement destiné à être déposé sur un fond marin, et pour mettre en oeuvre les procédés selon au moins les revendications 1 et 4, comprenant :

- une première base, adapté pour porter l'équipement, et comprenant une entrée d'eau et une sortie d'air;
- une deuxième base comprenant un orifice d'entrée d'eau et un orifice de sortie d'air;
- des moyens de commande pour commander une entrée d'eau à l'intérieur de chacune des bases *via* les orifices d'entrée d'eau et autoriser une sortie d'air *via* les orifices de sortie d'air; et
- un bras de liaison solidarisant la première base et la deuxième base entre elles.

dans lequel le dispositif comprend des moyens de fixation à rotation entre la première et la deuxième base, de manière à autoriser au moins une rotation de la première base par rapport à la deuxième base.

Ce dispositif, grâce à ses deux bases espacées, ses moyens de commande et sa souplesse de liaison, permet de mettre en oeuvre de façon particulièrement efficace les procédés décrits précédemment et d'avoir un dispositif stable sur le fond marin.

Avantageusement, le dispositif porteur comprend les caractéristiques suivantes, prises seules ou en combinaison :

- chaque base comprend plusieurs sous-compartiments étanches les uns par rapport aux autres,
- les moyens de fixation à rotation comprennent une fixation non rigide dans lequel le bras de liaison présente une extrémité encastrée dans ladite fixation, de manière à autoriser une rotation et/ou une inclinaison de la première base par rapport à la deuxième base par déformation de la fixation,

- les moyens de fixation à rotation comprennent un manchon en élastomère autorisant lesdites rotations,

- les moyens de fixation comprennent un cardan ou un double cardan,

- les moyens de fixation à rotation autorisent une rotation et/ou une inclinaison de la première base par rapport à la seconde base d'un angle inférieur ou égal à 10°, voire 5°, voire 2°,

- les moyens de commande comprennent des réservoirs d'airs comprimés permettant de vidanger les bases, de façon à éviter le branchement sous l'eau, dans des zones de forts courants, de tuyauterie,

- le dispositif comprend des moyens de fixation entre au moins un des deux bases et le bras de liaison, dans lequel les moyens de fixation autorisent une désolidarisation des deux bases l'une de l'autre,

- la première et/ou deuxième base est propre à coulisser le long du bras de liaison de manière à rapprocher ou écarter les bases l'une par rapport à l'autre.

- la longueur totale est comprise entre 30 et 40 mètres et la largeur entre 10 et 20 mètres, de préférence environ 35 et 15 mètres respectivement,

- chaque compartiment étanche comprend deux orifices de sortie d'eau configurés pour vidanger de l'eau située dans ledit compartiment, lesdits orifice étant disposés chacun au niveau d'une extrémité dudit compartiment, et chaque orifice est relié de façon étanche à un tuyau débouchant à l'intérieur du compartiment, à l'extrémité dudit compartiment opposée, de façon à faciliter la vidange des compartiments lorsque le dispositif est incliné autour d'un axe normal à la ligne reliant les deux extrémités considérées.

Enfin, l'invention propose un ensemble comprenant un dispositif porteur tel que décrit précédemment, et un équipement, l'équipement étant une hydrolienne.

## PRESENTATION DES DESSINS

D'autres caractéristiques, buts et avantages de l'invention ressortiront de la description qui suit, qui est purement illustrative et non limitative, et qui doit être lue en regard des dessins annexés, parmi lesquels :

- La figure 1 représente un dispositif destiné à être employé dans des procédés de mise en place et de retrait conformes à un mode de réalisation de l'invention ;
- La figure 2 illustre le lien entre la longueur totale du dispositif et la profondeur du fond marin ;
- Les figures 3a et 3b représentent une étape d'un procédé de mise en place du dispositif conforme à un mode de réalisation de l'invention ;
- Les figures 3c, 3d, 3c' et 3d' représentent différentes variantes d'étapes supplémentaires ;
- Les figures 4a et 4b représentent une étape préliminaire de retrait ;
- Les figures 4c et 4d représentent une étape d'un procédé de retrait du dispositif conforme à un mode de réalisation de l'invention ;
- La figure 5 représente un dispositif adapté pour mettre en oeuvre les procédés précédents ;
- Les figure 6a à 6e représentent différentes variantes de réalisation du dispositif ;
- La figure 7a représente un autre mode de réalisation du dispositif ;
- Les figures 7b et 7c représentent un autre mode de réalisation du dispositif ;
- Les figures 8a à 8c représentent un coulissement possible des flotteurs ;
- Les figures 9a à 9d représentent une liaison semi-rigide du dispositif ;
- Les figures 10a, 10b représentent des évents dans des compartiments étanches selon un mode de réalisation,
- Les figures 11a, 11b représentent des évents dans des compartiments selon un autre mode de réalisation,
- Les figures 12a et 12b représentent les propriétés physiques et dynamiques du dispositif qui doivent être vérifiées,
- Les figures 13 et 14 représentent des formes différentes pour les bases
- Les figures 15a et 15b représentent un mode de réalisation dans lequel les bases comprennent des pieds.

## DESCRIPTION DETAILLEE D'UN MODE DE REALISATION

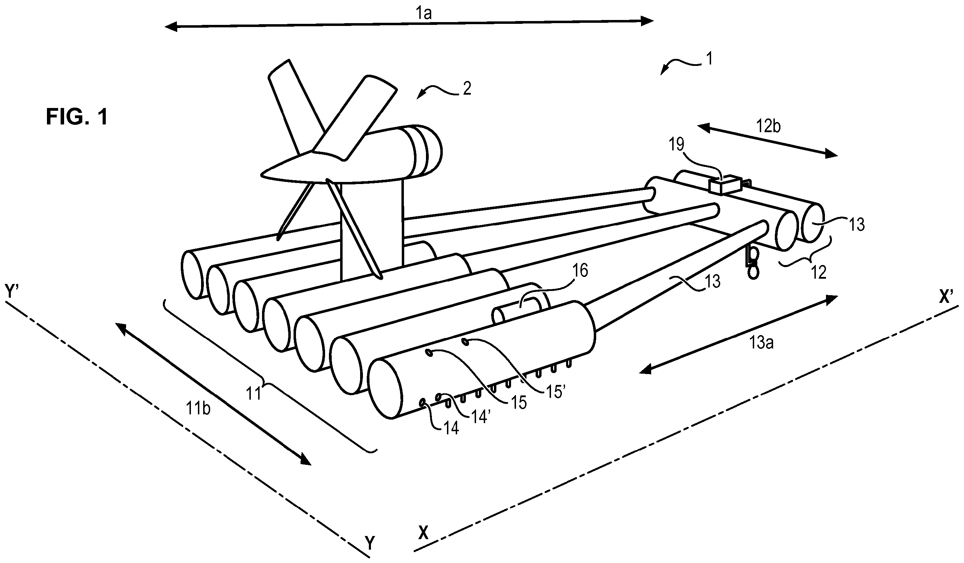

En référence à la **figure 1,** un dispositif 1 destiné à être mis en place et retiré selon respectivement les procédés de mise en place et de retrait conformes à l'invention va être présenté.

Le dispositif 1 est adapté pour porter au moins un équipement 2 destiné à être posé sur un fond marin 3 de profondeur 30. L'équipement 2, durant sa vie d'utilisation, doit être immergé et/ou émergé au moins une fois.

Préférentiellement, l'équipement 2 est une hydrolienne.

Le dispositif comprend une première base 11 et une deuxième base 12, solidaires entre elles de façon rigide ou quasi-rigide. Les deux bases forment deux espaces de flottaison indépendants.

Les deux bases 11, 12 sont préférablement reliées entre elles par un bras de liaison 13, de longueur 13a. Néanmoins, il est possible d'envisager deux bases 11, 12 adjacentes. On définit un axe longitudinal X-X' du dispositif 1 comme l'axe du bras de liaison 13.

Les première et deuxième bases 11, 12 ont respectivement une première largeur 11b et une deuxième largeur 12b. On définit un axe transversal Y-Y' du dispositif 1 comme un axe selon une des largeurs du dispositif. La direction Y-Y' est orthogonale à la direction X-X' et forme un plan dans lequel s'étend principalement les bases 11, 12.

Les deux bases comprennent chacune des orifices 14, 14', 15, 15' d'entrées/sorties d'eau/d'air et des moyens de commandes 16 permettant de contrôler les flux d'eau et de gaz à l'intérieur des espaces de flottaison indépendants, afin de pouvoir couler ou faire remonter les bases 11, 12 à l'aide de l'air ou de l'eau.

Les capacités de flottaison des bases 11, 12 sont adaptées pour permettre à un ou plusieurs équipements 2 d'être installés sur le dispositif 1 sans provoquer la coulée des bases 11, 12.

Le dispositif 1 a une longueur la qui vérifie avantageusement la condition suivante :

$$longueur\,totale\,1a \geq \frac{profondeur\,30}{sin(50°)}$$

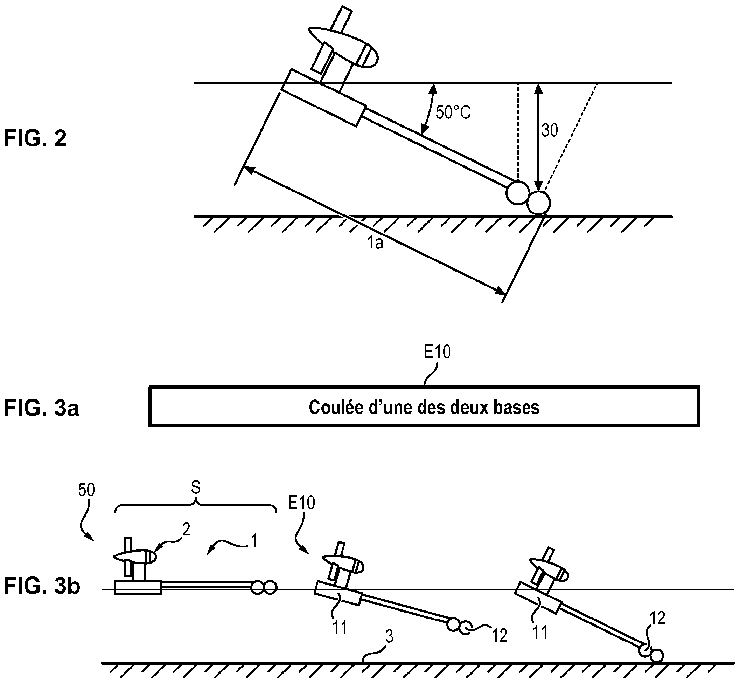

Comme cela sera explicité par la suite, lorsque le dispositif 1 est immergé ou émergé, une des deux bases 11, 12 sera au contact du fond marin 3 lorsque l'autre sera en surface. Afin de ne pas dépasser un angle d'inclinaison maximal, par rapport à la position du dispositif 1 lorsque les deux bases 11, 12 sont en surface, supérieur à 50°, la longueur totale la doit vérifier la condition précédente (voir **figure 2**).

Procédé de mise en place

Un procédé d'installation d'un ensemble comprenant un dispositif 1 et un équipement 2 va être décrit.

On notera que le dispositif 1 peut être immergé sans équipement 2.

Dans la description qui va suivre, la deuxième base 12 ne porte pas d'équipement 2. Néanmoins, le procédé est identique s'il s'agit de la deuxième base 12 qui porte un équipement 2, ou bien lorsqu'il s'agit des deux bases 11, 12 qui portent un équipement 2. La longueur totale la du dispositif 1 vérifie le critère explicité précédemment concernant l'angle de 50° et la profondeur 30 du fond marin 3.

L'ensemble formé par le dispositif 1 et par l'équipement 2 est destiné à être installé sur le fond marin 3, en aplomb duquel se trouve un site d'installation S, en surface.

Le fond marin 3 peut être le fond de la mer, d'un estuaire, d'un fleuve, d'un lac, d'une ria, d'un chenal, etc.

Dans une étape préliminaire, l'ensemble est amené sur le site d'installation S.

Alternativement, seul le dispositif 1 est amené sur le site d'installation S et le procédé comprend une étape supplémentaire, postérieure à l'étape préliminaire, durant laquelle on assemble le dispositif 1 et l'équipement 2 sur le site.

On privilégie une disposition dans laquelle la seconde base 12 (celle qui ne porte pas d'équipement en fait) fait face au courant, l'équipement 2 est alors orienté de façon adaptée. Il est préférable que la base libre (dans la description ici : la deuxième base 12) soit en amont du courant pour faciliter les opérations de remontée (la base comprenant l'hydrolienne est plus volumineuse donc elle est plus stable en aval du courant). En fonction du choix du positionnement respectif des bases lors du déplacement et de la mise en place sur le fond marin, l'hydrolienne est préalablement orientée dans le sens adéquat (l'orientation de l'hydrolienne sur les figures n'est pas limitative).

Dans une première étape E10 (**figures 3a, 3b**), un des deux bases 11 ou 12 est remplie avec de l'eau afin de provoquer une immersion de ladite base 11 ou 12. Durant la coulée de ladite base 11 ou 12 jusqu'au fond marin 3, l'autre base 12 ou 11 stabilise l'ensemble en restant tout ou en partie émergée et en flottaison.

Il est ainsi possible de contrôler la vitesse de coulage en adaptant le volume d'eau qui entre à l'intérieur de la base 11 ou 12 qui est immergée.

Durant cette étape E10, la base 11 ou 12 qui est remplie d'eau passe d'un état émergé à un état immergé au contact du fond marin 3.

La longueur totale la du dispositif 1 par rapport à la profondeur 30, est telle que l'autre base 12 ou 11 reste émergée et en flottaison durant toute l'étape E10. De plus, l'inclinaison de l'ensemble et en particulier de l'équipement 2 et de l'axe longitudinal X-X' reste inférieure à un angle maximal d'inclinaison de 70°, préférablement 50°, par rapport à la surface de l'eau durant toute l'étape E10.

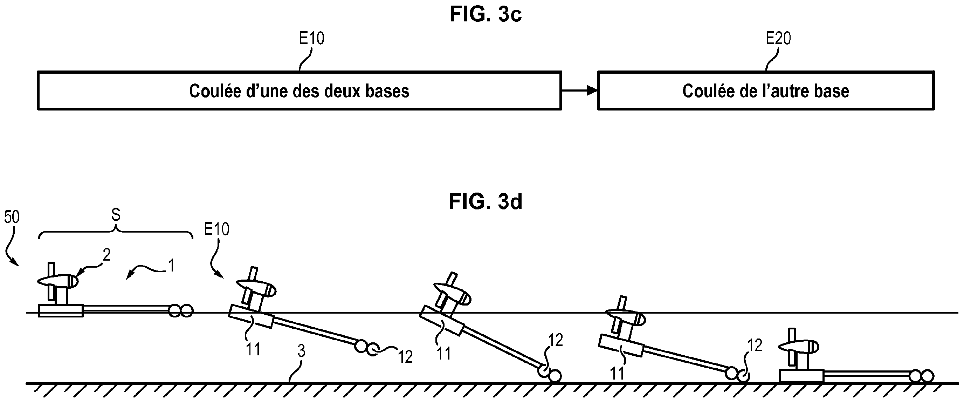

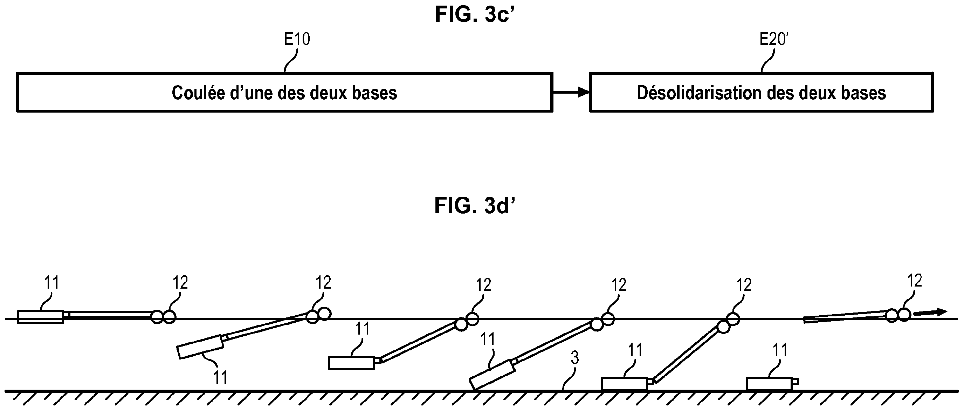

Selon un mode de réalisation (voir **figures 3c, 3d**), dans une deuxième étape E20, la base 12 ou 11 encore émergée et en flottaison est remplie avec de l'eau afin de provoquer l'immersion ladite base 12 ou 11 encore émergée de l'ensemble. Durant la coulée de ladite base 12 ou 11 jusqu'au fond marin 3, la base 11 ou 12 qui est au contact du fond marin 3 stabilise l'ensemble.

La largeur 11b ou 12b de la base 11 ou 12 en contact avec le fond marin 3 est telle que ladite base 11 ou 12 assure la stabilité transversale de l'ensemble lors de cette étape.

Le remplissage des deux espaces de flottaison définis par les bases 11, 12 est contrôlé par les moyens de commande 16.

Il est possible de contrôler la vitesse de coulage des bases 11, 12 en adaptant les volumes d'eau qui entrent respectivement à l'intérieur des premières 11 et deuxième 12 bases.

A la suite de cette deuxième étape, l'ensemble est disposé sur le fond marin 3.

Selon un autre mode de réalisation (voir **figures 3c', 3d'**) dans lequel l'équipement 2 est porté par la première base 11, dans une deuxième étape E20', la base 12 émergée et en flottaison est désolidarisée de la base 11 au contact du fond marin. De cette façon, la base 12 en flottaison a permis d'installer l'équipement 2 sur le fond marin 3. La base 12 émergée peut de cette façon être réutilisée pour immerger d'autres équipements. Alternativement, la base 11 portant l'équipement 2 est formée en plusieurs parties incluant une partie supportant l'équipement et une ou plusieurs parties ne portant pas l'équipement 2. On désolidarise la partie de la base 11 portant l'équipement 2 des autres parties ne portant pas l'équipement 2 ayant uniquement des fonctions de flottaisons et de coulées.

On comprendra que les première et deuxième bases 11, 12 peuvent être interverties dans ces différents modes de réalisation du procédé.

Avantageusement, la première étape E10 peut comprendre un maintien longitudinal de l'ensemble lors de la coulée, soit par un ou plusieurs mouillages ou par un ou plusieurs navires. Cela permet d'améliorer la précision de la mise en place sur le fond marin 3 tout en améliorant la sécurité du procédé.

Afin d'améliorer la sécurité et la facilité de la manoeuvre, le procédé peut comprendre les étapes suivantes.

- Une troisième étape E11 (entre les étapes E10 et E20), durant laquelle la base 12 au contact du fond marin 3 est immobilisée sur le fond marin 3 par des moyens d'immobilisation tel qu'un ancrage, une fixation par pieux ou encore par butée contre un obstacle ;
- Une quatrième étape E21 (après l'étape E10 ou E20), durant laquelle la base 11 est immobilisée sur le fond marin 3 par ancrage, fixation par pieux.

Une liaison quasi-rigide entre les bases 11, 12 du dispositif 1 permet à chaque base 11, 12 d'être posée de façon stable sur le fond marin 3. En effet, le fond marin 3 n'est généralement par une surface plane uniforme mais peut comporter des plans d'inclinaisons légèrement différentes. Par « posée de façon stable », on entend qu'au moins deux points distincts sur la largeur de l'une des bases 11 ou 12 sont au contact du fond marin 3.

Procédé de retrait

Un procédé de retrait va être décrit, en se fondant sur le même ensemble que précédemment utilisé.

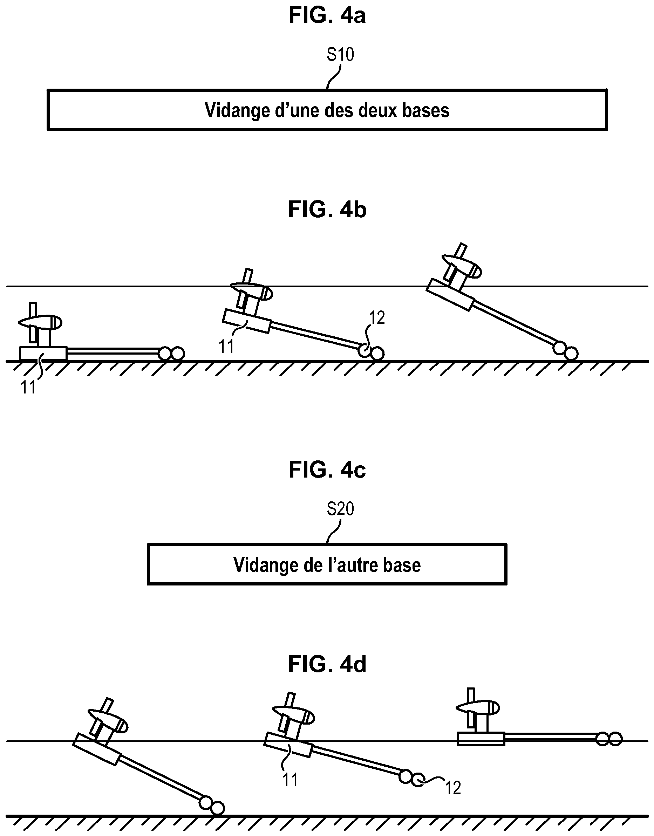

Selon un premier mode de réalisation d'une première étape S10 (**figures 4a, 4b**), l'un des deux bases 11 ou 12 est vidangée afin de la faire remonter à la surface du site S. Durant la remontée de ladite base 11 jusqu'à la surface, l'autre base 12 ou 11 stabilise l'ensemble en restant en contact avec le fond marin 3.

La vidange est contrôlé par les moyens de commande 16.

Il est ainsi possible de contrôler la vitesse de remontée de la base 11 ou 12 en adaptant le volume d'eau qui est évacué depuis l'intérieur de la base 11 ou 12 qui est vidangée.

Durant cette première étape S10, la base 11 qui est vidangée passe d'un état immergé au contact du fond marin 3 à un état émergé en flottaison.

La largeur 12b de l'autre base 12 est telle que ladite base 12 assure la stabilité transversale de l'ensemble lors de cette étape. Une liaison quasi-rigide entre les bases 11, 12 permet d'assurer aussi la stabilité transversale de l'ensemble.

Selon un deuxième mode de réalisation d'une première étape S10' (non représenté), une base 11 en flottaison (pouvant être amenée jusqu'au site d'installation S par bateau par exemple) est solidarisée à la base 12 au contact du fond marin 3. Alternativement, on resolidarise la partie de la base 12 au contact du fond marin 3 portant l'équipement 2 d'une autre partie ayant uniquement des fonctions de flottaisons et de coulées.

Selon une deuxième étape S20 (**figures 4c, 4d**), la base 12 ou 11 au contact du fond marin 3 est vidangée afin de la faire remonter à la surface. Durant la remontée de ladite base 12 ou 11 jusqu'à la surface, la base 11 ou 12 émergée et en flottaison stabilise l'ensemble.

La vidange est contrôlée par les moyens de commande 16.

Il est ainsi possible de contrôler la vitesse de remontée de la base 12 ou 11 immergée en adaptant le volume d'eau qui sort à l'extérieur de ladite base 12.

La largeur 11b, 12b de la base émergée 11 ou 12 est telle que la base 11 ou 12 émergée assure la stabilité transversale de l'ensemble lors de cette étape, en maintenant le métacentre de l'ensemble au-dessus du centre de gravité de l'ensemble.

La vidange des différents espaces de flottaisons est contrôlée par les moyens de commande 16.

Il est possible de contrôler la vitesse de vidange des bases 11, 12 en adaptant les volumes d'eau qui sortent respectivement des première 11 et deuxième 12 bases.

Le procédé peut ensuite comprendre une troisième étape de dégagement du site d'installation S par le même procédé que pour l'étape préliminaire du procédé de mise en place notamment.

Durant les différentes étapes du procédé de mise en place ou de retrait, il est possible de contrôler les volumes d'eau contenus dans les espaces de flottaison des bases 11, 12 afin d'améliorer encore la stabilité transversale de l'ensemble.

On comprendra que les première et deuxième bases 11 et 12 peuvent être interverties dans ces différents modes de réalisation du procédé.

A présent, un dispositif porteur particulièrement adapté aux procédés précédemment présentés va être décrit. Ce dispositif est donc un dispositif 1 tel qu'explicité auparavant. Les éléments en communs seront référencés de la même façon.

Le dispositif porteur

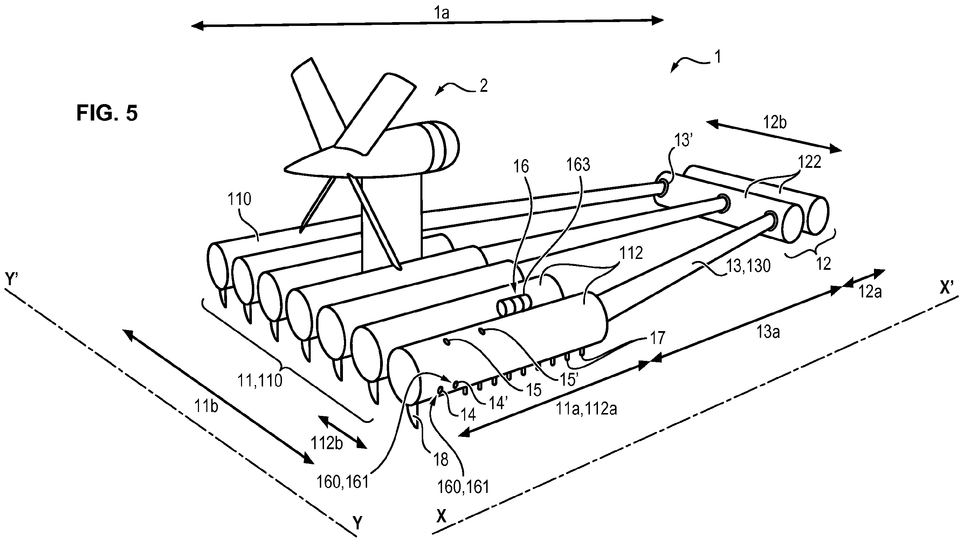

Un dispositif 1 porteur d'équipement est représentée en **figure 5.**

Le dispositif 1 est adapté pour porter au moins un équipement 2 destiné à être posé sur un fond marin 3 de profondeur 30. L'équipement 2, durant sa vie d'utilisation, doit être immergé et/ou émergé au moins une fois.

Préférentiellement, l'équipement 2 est une hydrolienne.

Le dispositif 1 comprend une première base 11 et une deuxième base 12, reliées entre elles de façon rigide ou quasi-rigide par un bras de liaison 13. La direction d'extension du bras de liaison 13 définit un axe longitudinal X-X' pour la base porteuse 1.

La première base 11 présente une première longueur 11a, mesurée selon l'axe longitudinal X-X', et une première largeur 11b, mesurée selon un axe transversal, orthogonal à l'axe longitudinal X-X'.

La deuxième base 12 présente une deuxième longueur 12a, mesurée selon l'axe longitudinal X-X', et une deuxième largeur 12b, mesurée selon un axe transversal, orthogonal à l'axe longitudinal X-X'.

Le bras de liaison présente une troisième longueur 13a. Cette troisième longueur 13a correspond aussi sensiblement à la distance séparant les premières 11 et deuxième 12 bases.

La longueur totale la du dispositif 1 est la somme des trois longueurs précédentes 11a, 12a, 13a. Cette longueur totale la correspond à une dimension longitudinale maximale du dispositif 1, c'est-à-dire une dimension du dispositif 1 selon l'axe longitudinale X-X', de la base.

Les première et deuxième bases 11, 12 comprennent une paroi entourant une chambre de flottaison remplie d'air qui permet de maintenir en flottaison la base porteuse 1 et l'équipement 2 à la surface de l'eau.

Les premières et deuxième bases 11, 12 sont adaptées pour porter chacune au moins un équipement 2. Selon les modes de réalisation, différentes configurations sont possibles :

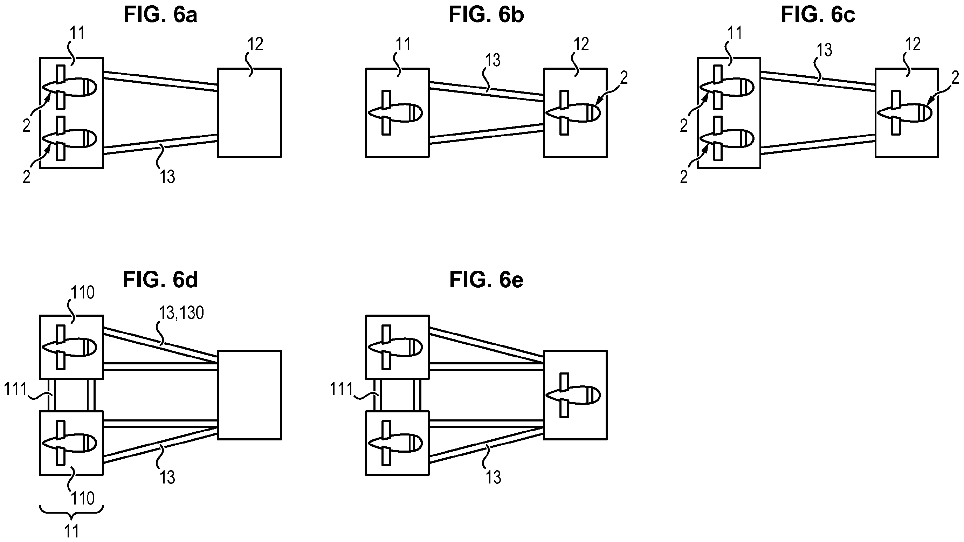

- Seule la première base 11 porte au moins un équipement 2 (**figures 5, 6a**) ;
- Les première 11 et deuxième 12 bases portent chacune au moins un équipement 2 (**figures 6b, 6c**).

L'équipement 2 est fixé de façon solidaire à la base 11 ou 12.

Les bases 11, 12 sont dimensionnées de sorte que la flottaison du dispositif 1 avec au moins un équipement 2 installé puisse être assurée.

La première base 11 peut être constituée de plusieurs premiers compartiments 110 indépendants les uns des autres reliés entre eux par des moyens de fixation 111 (**figures 6d, 6e**). Ces moyens de fixations 111 peuvent être, à titre d'exemple, des soudures ou des tiges rigides. Alternativement, ces moyens de fixation 111 peuvent être amovibles, par un système de vis-écrou. De cette manière, une fois la première base 11 positionnée sur le fond marin 3, les moyens de fixation 111 peuvent être enlevés de sorte à désolidariser les premiers compartiments 110 les uns des autres. De la même façon, la deuxième base 12 peut aussi être constituée de plusieurs deuxièmes compartiments indépendants les uns des autres reliés entre eux par des moyens de fixation.

Les première et (respectivement) deuxième bases 11, 12 et/ou compartiments 110 comprennent une pluralité de premiers et (respectivement) de deuxièmes sous-compartiments étanches 112, 122.

En référence aux **figures 5, 6a-6c,** plusieurs variantes de réalisation en ce qui concerne les bases sont possibles :

- La première base 11 comprend un seul premier compartiment 110 et :

  ∘ Au moins un équipement 2 est monté sur la première base 11 mais pas sur la deuxième base 12 (voir **figures 5, 6a**),
  ∘ Au moins un équipement 2 est monté sur chaque base 11, 12 (voir **figures 6b, 6c**),

La première base 11 comprend deux premiers compartiments secondaires 110 et :

◦ Au moins un équipement 2 est monté sur chaque premier compartiment 110 mais pas sur la deuxième base 12 (**figure 6d**), les compartiments 110 étant reliés par les moyens de fixations 111,

◦ Au moins un équipement 2 est monté sur les deux compartiments 110 et sur la deuxième base (**figure 6e**).

Chaque sous-compartiment étanche 112, 122 est adapté pour être sélectivement rempli d'eau et vidé, typiquement avec de l'eau dans lequel l'ensemble va être immergé. Ainsi, de préférence, les premiers sous-compartiments étanches 112 ont une longueur 112a et une largeur 112b, la longueur 112a étant supérieure à la largeur 112b pour limiter les effets de carène liquide. De préférence, la longueur 112a des premiers sous-compartiments étanches 112 est sensiblement égale à la première longueur 11a et la largeur 112b des premiers sous-compartiments étanches 112 est inférieure à la première largeur 11b (**figure 5**).

Les mêmes considérations de dimensions peuvent être appliquées aux seconds sous-compartiments étanches 122 lorsqu'un équipement 2 est installé sur la deuxième base 12.

Chaque sous-compartiment étanche 112, 122 comprend au moins un orifice d'entrée d'eau 14 adapté pour laisser entrer l'eau à l'intérieur du sous-compartiment étanche 112, 122 et un orifice de sortie d'eau 14' adapté pour laisser sortir de l'eau à l'extérieur du sous-compartiment étanche 112, 122.

L'orifice d'entrée 14 et l'orifice de sortie 14' peuvent être confondus.

Chaque sous-compartiment étanche 112, 122 comprend en outre au moins une ouverture de sortie d'air 15' pour que l'air contenu à l'intérieur du compartiment étanche 112, 122 puisse s'échapper. Les sous-compartiments étanches 112, 122 peuvent aussi comprendre un orifice d'entrée d'air 15 pour pouvoir injecter de l'air à l'intérieur desdits compartiments. Les orifices d'entrée 15 et de sortie 15' d'air peuvent être confondus.

En outre, des moyens de commande 16 sont prévus pour permettre le remplissage et la vidange des chaque sous-compartiment étanche 112, 122 *via* les entrées 14 et sorties 14' d'eau.

Ces moyens de commande 16 sont préférablement commandés à distance, ce qui permet d'éviter les interventions humaines localement lorsque la base porteuse 1 est installée.

Ces moyens de commande 16 peuvent comprendre notamment, selon les modes de réalisation, des vannes 160, et/ou des réservoirs d'air comprimé 163. On peut aussi prévoir des évents 161, c'est-à-dire de simples ouvertures. Les pressions d'air, contrôlées, dans les bases permettent d'empêcher l'entrée de l'eau.

Les vannes 160 permettent de contrôler les ouvertures et fermetures des orifices d'entrées 14 et de sortie d'eau 14'.

Dans un mode de réalisation préféré, on dispose les réservoirs d'air comprimés 163 dans les bases 11 et 12, pour permettre de vidanger l'eau des sous-compartiments étanches 112, 122. Ces réservoirs 163 soufflent l'eau hors des bases, dans l'eau environnante. Les réservoirs 163 peuvent être utilisés avec des vannes ou des évents.

Un des intérêts des réservoirs d'air comprimés 163 réside dans le fait qu'il n'est pas nécessaire d'apporter de l'énergie extérieure à la base pour vidanger l'eau des sous-compartiments étanches 112, 122. En effet, le dispositif est conçu pour être installé dans des zones de forts courants (courants marins pour hydrolienne) et il est complexe de venir brancher un tuyau d'air comprimé.

Dans le cas de l'invention, des réservoirs 163 embarqués dans les bases 11, 12 simplifient la procédure de vidange puisqu'il suffit de venir ouvrir les vannes 160 ou évents 161 à l'aide d'un robot, pour déclencher la vidange et provoquer la remontée des bases.

Selon les besoins, ces réservoirs d'air comprimés 163 sont dimensionnés pour permettre d'effectuer plus d'une remontée. Dans ce cas, une chasse, déclenchée par un robot par exemple, est alors calibrée pour ne chasser qu'une partie contrôlée de l'air stocké.

On peut ainsi prévoir une étape d'ouverture des réservoirs d'air comprimés 163 lors des procédés décrits précédemment afin de déclencher la remontée.

Alternativement, les réservoirs peuvent être installés sur des robots qui se connectent ensuite aux bases 11, 12 pour en chasser l'eau.

La conception des bases 11, 12 et/ou des compartiments 110 en plusieurs sous-compartiments étanches 112, 122 permet de limiter les effets de carènes liquides mais aussi de mieux vidanger les bases 11, 12.

Le bras de liaison 13 est rigide et relie solidairement les première et deuxième bases 11, 12 tout en les maintenant à une distance sensiblement égale à la troisième longueur 13a.

La longueur totale la est définie en fonction de la profondeur 30 du fond marin. En particulier, le bras de liaison 13 est particulièrement adapté pour modifier la longueur totale la en allongeant ou raccourcissant la troisième longueur 13a.

Lorsque la deuxième base 12 est remplie d'eau et qu'elle coule jusqu'au fond marin 3 et que la première base 11 est émergée, l'angle défini par l'axe longitudinal et la surface de l'eau est préférablement inférieur à 50°. La valeur de cet angle, modulable en fonction des équipements 2 et/ou de la résistance de la base porteuse 1 est une valeur limite permettant d'éviter les dommages de la base porteuse 1 et/ou de l'équipement 2. Cet angle de 50° ainsi que la profondeur 30 du fond marin 3 permettent de définir la longueur totale la et donc la troisième longueur 13a. Inversement, lorsque la deuxième base 12 est au contact du fond marin 3 et que la première base 11 est émergée, il est préférable que l'angle soit supérieur à 20°, afin de pouvoir limiter la longueur totale la du dispositif porteur 1.

Comme mentionné auparavant, la longueur totale la doit vérifier l'équation suivante (**voir figure 2**) :

$$longueur\,totale\,1a \geq \frac{profondeur\,30}{sin(50°)}$$

Le bras de liaison 13 comprend préférablement des éléments tubulaires 130, ce qui permet notamment d'augmenter la résistance à la pression de l'air de soufflage et de réduire les coûts lors de la fabrication.

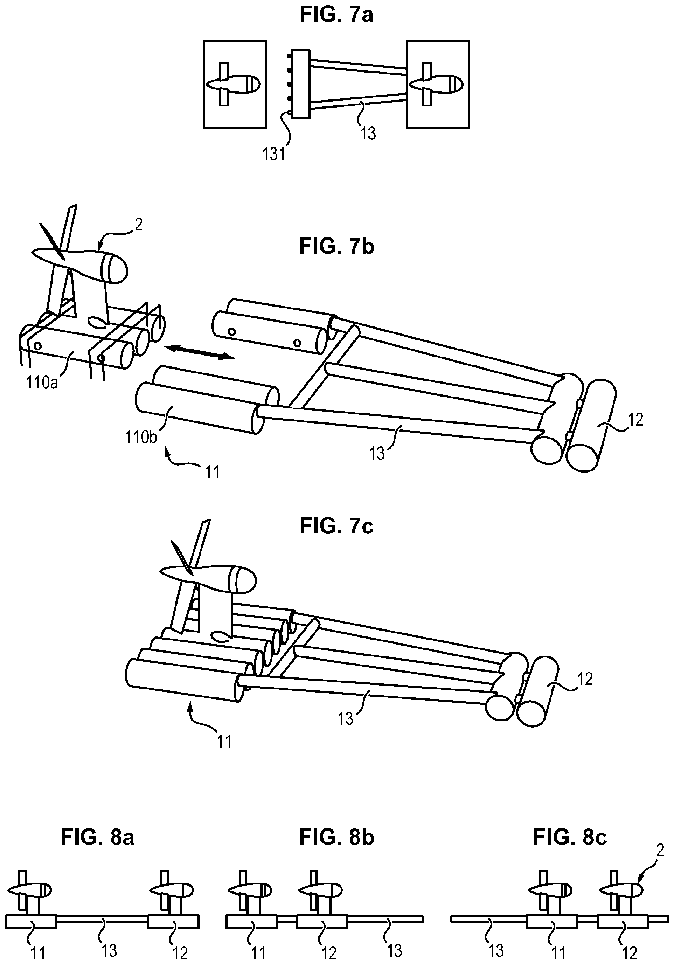

Selon un mode de réalisation, les première et/ou deuxième bases 11, 12 sont fixées de façon amovible au bras de liaison 13 par des moyens de fixation 131 (**figure 7a**). Ces moyens de fixation 131 peuvent comprendre un système de vissage, de serrage, de mâchoires ou encore d'emboitage. Les moyens de fixation 131 permettent de détacher la première base 11 et/ou la deuxième base 12 du bras de liaison 13 pour la ramener en surface et immerger d'autres équipements 2. Ce mode de réalisation permet de réutiliser une des deux bases pour immerger d'autres bases et de limiter l'espace occupé par le dispositif sur le fond marin 3. En outre, il permet de limiter les coûts liés au matériel immobilisé.

D'une façon complémentaire, ce mode de réalisation peut prévoir une rotation entre le bras de liaison 13 et au moins une base 11 ou 12 selon une direction orthogonale à l'axe X-X' et sensiblement parallèle à la direction définie par la largeur du dispositif 1 (voir **figure 3d'**). Cette rotation permet, lors de la première étape E10, que la base soit posée sensiblement à plat au fond et ainsi de limiter l'inclinaison de l'équipement 2 et plus généralement de la base.

Selon un autre mode de réalisation, on définit une portion support 110a de la première base 10 qui supporte effectivement l'équipement 2 et une portion flottaison 110b qui ne supporte pas l'équipement 2 mais contribue à la flottaison (et la coulée) de la base 11 (voir **figures 7b** et **7c**). Ces deux portions 110a, 110b sont désolidarisables à l'aide de moyens de fixation amovibles afin de pouvoir installer uniquement l'équipement 2 sans conserver tout le dispositif 1 sur le fond marin 3 après installation (voir procédé associé).

Selon un autre mode de réalisation, les première et deuxième bases 11, 12 sont mobiles en translation l'une par rapport à l'autre le long du bras de liaison 13 (**figures 8a, 8b, 8c**). Cette mobilité en translation permet d'ajuster la distance entre les deux bases 11, 12 pour des raisons de transports, de praticité et d'adaptabilité.

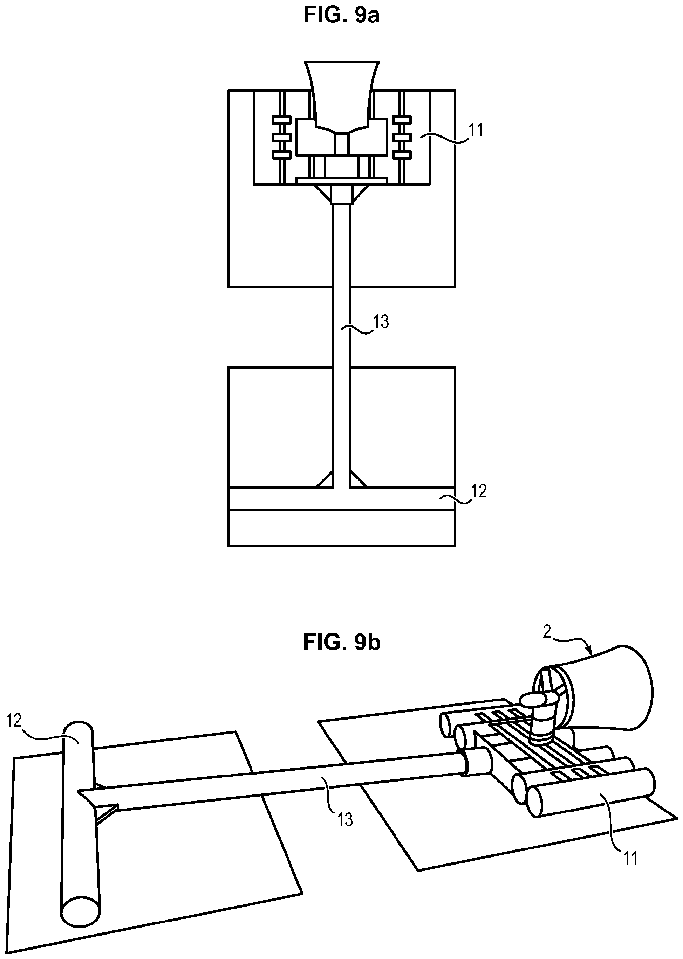

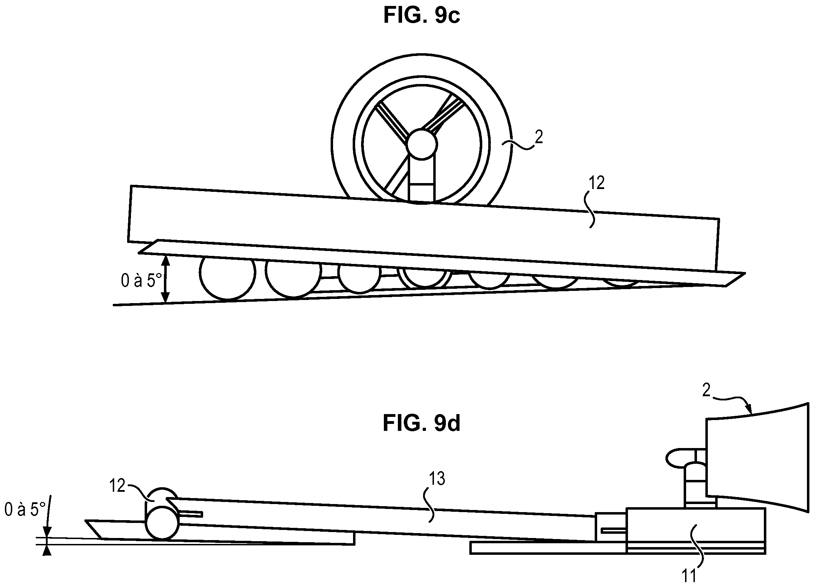

La fixation entre le bras de liaison 13 et les bases 11, 12 peut permettre une tolérance à la rotation de quelques degrés des bases 11, 12 selon l'axe longitudinal X-X' et/ou selon l'axe transversal Y-Y' (axe parallèle à la largeur du dispositif) (voir **figures 9a** à **9d**), pour changer les inclinaisons respectives de bases.. La dernière rotation possible (selon un axe orthogonal au plan défini par le dispositif, c'est-à-dire un plan comprenant les dimensions selon lesquelles s'étendent la longueur et la largeur du dispositif) est moins pertinente puisque lors d'une telle rotation, les deux bases 11, 12 restent dans un même plan.

Pour cela, le dispositif comprend des moyens de fixation à rotation entre la première et la deuxième base, c'est-à-dire que ces moyens autorisent ladite ou lesdites tolérances mentionnées précédemment. Typiquement, les rotations permises sont comprises entre 0 et 10°, voire 0 et 5°, voire 0 et 2°. Cette souplesse dans la fixation autorise les bases 11, 12 à se poser chacune sur des plans non parallèles d'inclinaisons différentes : le fond marin 3 n'est en général pas une surface uniformément plane.

La fixation peut être disposée soit entre la première base 11 et le bras de liaison 13, soit entre la deuxième base 12 et le bras de liaison 13.

Dans un mode de réalisation, la fixation peut être réalisée à l'aide d'un manchon de fixation 13' en élastomère se trouvant sur au moins une base 11, 12 et dans lequel le bras de liaison 13 présente une extrémité encastrée, de manière à autoriser une rotation de la première base 11 par rapport à la deuxième base 12 par déformation élastique du manchon 13'. Par exemple, l'élastomère est un caoutchouc vulcanisé.

Dans un autre mode de réalisation, la fixation se fait à l'aide d'un cardan avec butée ou d'un double cardan, typiquement avec butée, la butée permettant de limiter la liberté en rotation (un cardan simple qui autorise deux rotations sur deux axes normaux entre eux. L'angle de rotation est limité par des butées de tout type : tube dans un tube, axe dans une lumière...). Cette souplesse dans la fixation autorise les bases 11, 12 à se poser chacune sur des plans non parallèles d'inclinaisons différentes : le fond marin 3 n'est en général pas une surface uniformément plane. Typiquement, les rotations permises sont comprises entre 0 et 10°, voire 0 et 5°, voire 0 et 2°.

Les moyens de fixation à rotation entre les bases 11 et 12 forment une liaison quasi-rigide explicitée précédemment.

Enfin, les bases 11, 12 peuvent comporter des moyens d'accroche 17, tels que des crampons ou assimilés, adaptés pour limiter le glissement entre la base porteuse 1 et le fond marin 3 lorsque la base porteuse 1 est installée.

De la même façon, les bases 11, 12 peuvent comporter sur la face qui sera confrontée au courant, des éléments d'enfouissement 18, adapté pour limiter l'affouillement du fond marin sur lequel repose la base porteuse 1. Les éléments d'enfouissement 18 comprennent par exemple des tiges propres à être enfoncées dans le sable.

La base porteuse 1 peut aussi comprendre des moyens de propulsion 19 pour déplacer la base porteuse 1 en surface et l'amener sur le lieu de mise en place.

Typiquement, ces moyens de propulsion peuvent être une hélice ou une turbine.

La longueur totale la du dispositif 1 est par exemple comprise entre 30 et 40 mètres et la largeur entre 10 et 20 mètres, de préférence environ 35 et 15 mètres respectivement.

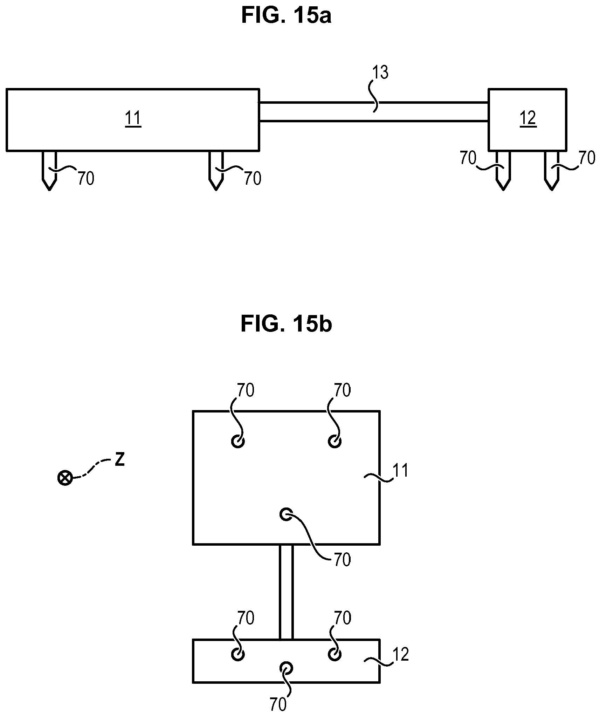

Enfin, les bases 11 et 12 peuvent comprendre une pluralité de pieds 70 intégrés, sur lesquelles elles reposent (voir **figures 15a, 15b**). Préférentiellement, pour éviter les effets liés à l'hyperstatisme (c'est à dire plus de contraintes de maintien sur le fond que nécessaire) ou du manque de stabilité qui peut y être associé (par exemple quatre points de contact dans un même plan, disposé sur un sol non plan), trois pieds sont disposés sur la base portant l'équipement (ici la première base 11). Ces trois pieds permettent de s'assurer que la base sera stable et pas bancale.

Sur la deuxième base 12, dans la mesure où elle est attachée à la première base 11, deux pieds seulement peuvent être prévus, préférablement disposés symétriquement par rapport à un axe de symétrie selon la direction X-X' (non représenté sur les figures). Alternativement, trois pieds peuvent aussi être prévus sur la deuxième base (celle qui ne porte pas d'équipement).

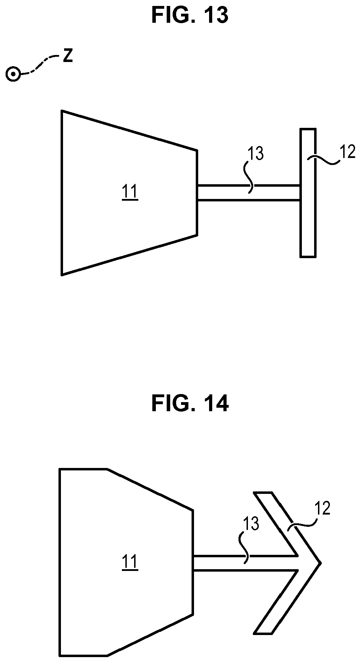

Les deux bases 11 et 12 étant reliées par des moyens de fixation à rotation, elles demeurent libres de bouger dans une certaine mesure l'une par rapport à l'autre. Si la forme de la base le permet, les trois pieds peuvent alors être disposés en triangle équilatéral, de manière à répartir au mieux le poids de la base qu'ils portent. Alternativement, les trois pieds sont disposés en triangle isocèle, pour les mêmes raisons de répartition de la masse (voir **figure 13b**).

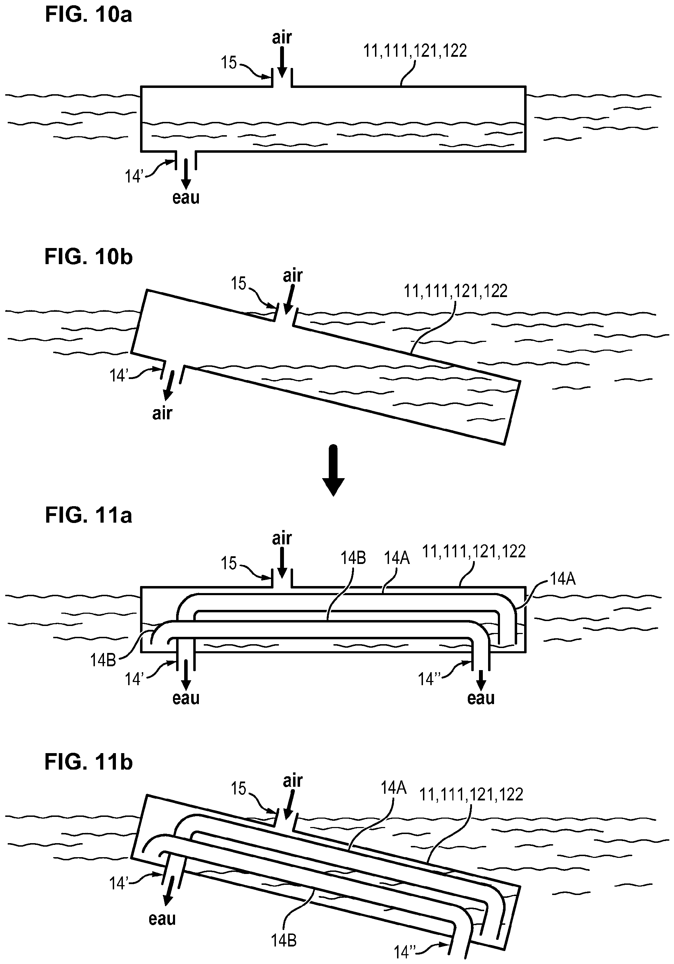

Additionnellement, comme représenté en **figures 10a, 10b et 11a, 11b,** d'autres modes de réalisation des moyens de commande peuvent être utilisés.

Sur les **figures 10a et 10b,** l'orifice 15 d'entrée d'air (une pluralité d'orifice 15 peut être prévue) est disposé en partie supérieure d'un compartiment 110, 112, 122 et l'orifice de sortie d'eau 14' (un évent, sans vanne) est disposé en partie inférieure du compartiment 110, 112, 122, au niveau de l'extrémité longitudinale (selon l'axe X-X') qui est la plus haute lors de la vidange du dispositif, qui se penche donc (cf. procédé précédent).

L'exemple va être illustré sur des compartiments 110, 112 s'étendant longitudinalement tout d'abord.

La **figure 10b** illustre le problème qui peut se poser à cause de l'inclinaison : l'air injecté par l'orifice 15 ressort directement par l'orifice 14', au lieu de chasser l'eau du compartiment 110, 112, 122. Pour résoudre ce problème, il est prévu un deuxième orifice de sortie d'eau 14" disposé en partie inférieure de la base, mais au niveau de l'autre extrémité longitudinale. En outre, chacun de ces orifices 14', 14" est reliée à un tuyau qui débouche, à l'intérieur du compartiment, à l'extrémité opposée de l'orifice à laquelle il est raccordé. Ainsi, à l'orifice 14' situé à une extrémité du compartiment, en partie inférieure, est raccordé de façon étanche un tuyau 14A, débouchant à l'intérieur du compartiment, à l'autre extrémité selon l'axe longitudinal X-X' ; et à l'autre orifice 14", situé à une extrémité longitudinale opposé de l'orifice 14' (c'est-à-dire au voisinage de l'extrémité du tuyau 14A) est raccordé de façon étanche un tuyau 14B, qui débouche à l'intérieur du compartiment au niveau de l'extrémité opposée de l'orifice 14" (c'est-à-dire au voisinage de l'orifice 14'). On se réfère à la **figure 11b.**

Ce mode de réalisation selon l'axe longitudinal est particulièrement pertinent lorsque le compartiment s'étend essentiellement selon l'axe longitudinal X-X'. Sur la **figure 1** par exemple, il s'agit de la première base qui dispose de tels compartiments. En effet, sinon les deux orifices 14', 14" seront trop rapprochées pour être utiles.

Il peut être appliqué quel que soit le nombre de compartiment ou de sous-compartiments étanches.

Le mode de réalisation s'applique aussi selon l'axe transversal Y-Y', ce qui est particulièrement pertinent lorsque le compartiment s'étend essentiellement selon l'axe transversal Y-Y'. Sur la **figure 1** par exemple, il s'agit de la deuxième base qui dispose de tels compartiments.

Grâce à cette tuyauterie, lorsque le dispositif penche durant la vidange, l'air ne s'échappe pas directement sans vidanger de l'eau hors du compartiment : en effet, comme représenté en **figure 11b,** l'orifice 14' n'est pas ouvert directement à l'air à cause du tuyau 14A et pour que l'air s'échappe par le tuyau 14B, la pression doit vaincre la pression hydrostatique présente dans le tuyau 14B ; or l'orifice 14' présente une pression hydrostatique moindre, étant donné qu'il est plus proche de la surface (altitude plus élevée) de l'eau. Par conséquent, l'eau dans le compartiment sera chassée par le tuyau 14A (et l'orifice 14'). Plus généralement, ce mode de réalisation facilite la vidange des compartiments lorsque le dispositif est incliné autour d'un axe normal à la ligne reliant les deux extrémités considérées.

Dans ce mode de réalisation, les orifices de sorties d'eau sont avantageusement de simples évents, sans vanne de contrôle, pour limiter l'actionnement de matériel sous l'eau, dans des zones de forts courants. Le flux d'eau est ainsi contrôlé par la gestion de la pression d'air à l'intérieur du compartiment. Typiquement, en fermant l'orifice 15 d'entrée d'air, la flottaison est assurée (si les compartiments sont emplis d'air), et en augmentant cette pression, l'eau des compartiments peut être chassée (si les compartiments comprennent de l'eau), comme indiqué précédemment.

Par « partie inférieure », on entend le dessous du dispositif 1 lorsque celui-ci est en utilisation. Les orifices de dégagement d'eau 14', 14" doivent en effet être immergé dans de l'eau pour pouvoir dégager de l'eau.

Par « au niveau de », on entend « à proximité de », de sorte que l'orifice reste immergé même si le dispositif est incliné et que la quantité d'eau devient faible (en effet, l'eau va se diriger vers les points les plus bas du compartiment, qui sont situés nécessairement au niveau des extrémités longitudinale du compartiment).

Ce mode de réalisation peut être mis en oeuvre indépendamment d'autres caractéristiques, telle que la liaison semi-rigide.

*Caractérisation géométrique et dynamique du dispositif*

Le dispositif 1 défini précédemment possède des propriétés géométriques permettant d'assurer sa stabilité lorsque ledit dispositif 1 est immergé dans l'eau et en particulier lorsqu'une des deux bases 11, 12 est au contact du fond marin 3 et que l'autre des deux bases 11, 12 est simplement immergée.

Un des dangers d'un procédé de mise en place et de retrait tel que défini précédemment réside dans le chavirage du dispositif 1, c'est-à-dire une situation dans laquelle l'équipement 2 se retrouverait entre le fond 3 et le dispositif 1, au lieu d'être entre la surface du site S et le dispositif 1. Les risques de chavirage dépendent notamment du poids des bases 11, 12, de l'équipement 2, des volumes de flottaison et des répartitions des volumes d'eau dans les bases 11, 12, de la position des centres de gravité des bases 11, 12, de l'équipement. Les procédés précédemment décrit permettent de lutter contre le chavirage en ayant toujours une des deux bases soit à la surface du site S, soit posée sur le fond 3. Il est possible de caractériser géométriquement le dispositif 1 pour qu'il optimise la stabilité du procédé de la manière suivante.

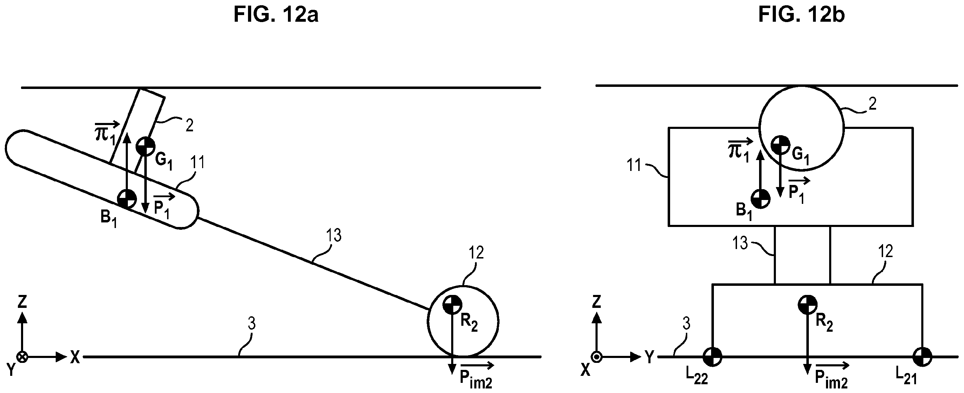

On définit un repère cartésien direct XYZ tel que représenté sur les **figures 12a, 12b,** et les coordonnées d'un point quelconque M étant notées par $x_M$, $y_M$, $z_M$.

On définit un premier groupe N1 par la première base 11, l'équipement 2 (si présent), et le bras de liaison 13.

On définit un second groupe N2 pour la deuxième base 12 (et éventuellement un équipement 2 qu'elle porterait).

Enfin, on définit, au moment de l'immersion totale et sans retenue du premier groupe (la première base 11 et de l'équipement 2 éventuel), c'est-à-dire que la deuxième base 12 est posée sur le fond marin et que la première base 11 commence sa coulée, c'est-à-dire son immersion totale (on peut aussi parler d'immersion totale du premier groupe; en effet, l'équipement ne joue pas de rôle majeur dans le moment de la définition des équations ci-dessous puisque l'instant critique correspond au remplissage voulu des ballasts permettant la coulée) :

- G1 le centre d'inertie (ou de gravité dans le cas présent) des masses du premier groupe N1 (y compris l'eau à l'intérieur de la première base 11 permettant la coulée de ladite base), la position de G1 étant corrigée des effets des carènes liquides, c'est-à-dire des effets du déplacement de l'eau à l'intérieur de la première base 11,
- $\overrightarrow{P1}$ le poids émergé du premier groupe N1 dans l'air, de valeur P1 (le poids émergé correspond au poids gravitationnel, à la poussée d'Archimède de l'air près),
- B1 est le centre de poussée hydrostatique, c'est-à-dire le point d'application de la poussé hydrostatique $\overrightarrow{\Pi1}$ de valeur $\Pi1$, du premier groupe N1,
- R2 est le centre d'application du poids immergé, de valeur Pim2, du second groupe N2, c'est-à-dire de la résultante du poids $\overrightarrow{P2}$, de valeur P2, du second groupe N2 et de la poussé hydrostatique $\overrightarrow{\Pi2}$ de valeur $\Pi2$ du second groupe. Le centre d'application R2 est calculé par relation barycentrique entre les points d'application du poids et de la poussée hydrostatique. En pratique, comme le deuxième groupe est immergé et n'a plus de flottabilité (la deuxième base 12 est remplie d'eau), la poussée d'Archimède est négligeable face au poids P2 : R2 peut être quasiment confondu avec le centre d'application du poids émergé,
- L21 et L22 sont les points latéraux d'appui de la deuxième base 12 sur le fond 3, dans le cas où l'inclinaison se fait selon l'axe longitudinal X-X', avec $y_{L21} > y_{L22}$, la largeur 12b étant donc supérieure ou égale à la différence $y_{L21}-y_{L22}$,

Le dispositif 1 et l'équipement 2 ont donc des mouvements de rotations selon l'axe X-X' (mouvement de roulis ou de gîte) et Y-Y' (mouvement de tangage).

La projection sur l'axe des Y des coordonnées des points précédents fait donc intervenir l'angle de gîte, qui est sensiblement égal à l'angle défini par la largeur du dispositif 1 et le fond marin 3.

Pour des questions d'utilisation, et aussi de contraintes structurelles sur le dispositif, il est souhaitable que le dispositif reste stable pour des angles de gîte jusqu'à douze degrés, préférablement inférieur à sept degrés, préférablement inférieur à cinq degrés et encore préférablement inférieur à trois degrés.

Le dimensionnement de la base porteuse 1 permet d'assurer que les équations suivantes sont vérifiées :

$$P1 \left[ A \cdot (z_{G1}-z_{B1}) + (y_{G1}- y_{B1}) \right] < Pim2 \, (y_{L21} - y_{R2})$$

et

$$P1 \left[ A \cdot (z_{G1}-z_{B1}) - (y_{G1}-y_{B1}) \right] < Pim2 \left( y_{R2} - y_{L22} \right)$$

Avec A égal à 0,21 ou A égal à 0,12 ou encore A égal à 0,087 ou A égal à 0,052.

Ces deux équations assurent que le dispositif accepte une gîte dans les deux rotations jusqu'à respectivement douze degrés, sept degrés, cinq degrés et trois degrés. A correspond à la tangente de l'angle en degré.

Une valeur de A égal à 0,12 est un bon compromis (stabilité de 7°).

De cette manière, la deuxième base 12 permet de stabiliser la coulée de la première base 11 en s'assurant que le dispositif 1 ne chavire pas : le moment de « rappel » (celui qui maintient la deuxième base 12 à plat au contact du fond 3) est plus important que le moment de « chavirage » (celui qui tend à faire chavirer le dispositif 1).

La définition des points précédents et les valeurs précédentes s'appliquent aussi pour le procédé d'émersion, au moment où la deuxième base 12 est au contact du fond marin, pour stabiliser, et la première base 11 commence à émerger, c'est-à-dire l'instant précédent le moment où une partie de la première base 11 est à l'air libre.

En outre, des formes géométriques particulières des premières et deuxièmes bases permettent d'améliorer la stabilité.

Les **figures 13** et **14** illustrent ces formes.

Dans un mode de réalisation, la première base 11 a, vue depuis la direction z, une forme de trapèze, le trapèze convergeant vers la deuxième base 12 selon la direction longitudinale X-X'. La deuxième base 12 peut alors avoir une forme rectiligne, c'est-à-dire selon la direction transversale y une forme de rectangle. La forme en trapèze permet un meilleur alignement lors du déplacement (une barge rectangulaire a tendance à s'écarter de l'axe de déplacement).

Dans un autre mode de réalisation, la première base 11 a, vu depuis la direction z, une forme de demi-octogone, coupé selon un plan de symétrie le long d'une arête. La deuxième base 12 peut alors avoir une forme de V, le V divergeant en direction de la première base selon la direction longitudinale X-X'.

On peut aussi combiner les modes de réalisation de deux illustrations.

Sur les **figures 13 et 14,** la deuxième base 12 ne porte pas d'équipement 2.

Plus généralement, on peut définir une forme selon laquelle la largeur de la première base 11 va en diminuant en direction de la deuxième base 12 selon la direction longitudinale X-X'. Cette forme divergente en direction de la deuxième base 12 augmente la stabilité en déplacement, lorsque la deuxième base 12 est en amont (on tracte le dispositif par la deuxième base). En outre, cet effet de stabilité se retrouve dans les phases d'immersion, lorsqu'on positionne la deuxième base 12 en amont du courant et la première base 11 en aval du courant.

Inversement, si le dispositif est déplacé et/ou installé dans l'autre sens, c'est-à-dire la première base 21 en amont et la deuxième base 22 en aval, la largeur de la forme de la première base 11 va en diminuant en direction opposée de la deuxième base 12. Les formes explicitées précédemment restent applicables, modulo cette inversion.

**Revendications**

**1.** Procédé de mise en place sur un fond marin (3) d'un dispositif (1) portant au moins un équipement (2), le dispositif (1) comprenant :

- Une première et une deuxième bases (11, 12) solidaires entre elles et formant deux espaces de flottaison indépendants,
- des orifices (14, 14', 15, 15') d'entrées/sorties d'eau/d'air et des moyens de commandes (16) permettant de contrôler les flux d'eau et d'air à l'intérieur des espaces de flottaison,

au moins une des deux bases (11, 12) portant l'équipement (2), le procédé comprenant :

- une étape de remplissage (E10) de la deuxième base (12) avec de l'eau, la première base (11), émergée et en flottaison à la surface, stabilisant le dispositif (1) pendant la coulée de la deuxième base (12) jusqu'au contact avec le fond marin (3),
- une étape de remplissage (E20) de la première base (11) avec de l'eau, la deuxième base (12) étant en contact avec le fond marin (3) et stabilisant le dispositif (1) pendant la coulée de la première base (11) jusqu'au fond marin (3),

dans lequel le dispositif (1) vérifie les conditions suivantes, au moment où la seconde base (12) étant posée sur le fond, la première base (11) s'immerge complètement :

$$P1 \, [ \, A. \, (z_{G1}-z_{B1}) + (y_{G1}- y_{B1}) \, ] < Pim2 \, (y_{L21} - y_{R2})$$

et

$$P1 \, [ \, A. \, (z_{G1}-z_{B1}) - (y_{G1}-y_{B1}) \, ] < Pim2 \, (y_{R2} - y_{L22})$$

avec A égal à 0,21 ou encore 0,12 ou encore 0,087 ou encore 0,052, où, pour un repère cartésien direct XYZ et les coordonnées d'un point quelconque M étant notées par $x_M$, $y_M$, $z_M$ :

- G1 le centre d'inertie des masses d'un premier groupe (N1) défini par la première base (11), l'équipement (2), et y compris l'eau à l'intérieur de la première base (11), la position de G1 étant corrigée des effets des carènes liquides,
- $\overrightarrow{P1}$ le poids émergé du premier groupe (N1) dans l'air, de valeur P1,
- B1 est le centre de poussée hydrostatique du premier groupe (N1),
- R2 est le centre d'application du poids immergé, de valeur Pim2, du second groupe (N2) défini par la seconde base (12) et son équipement éventuel, c'est-à-dire de la résultante du poids $\overrightarrow{P2}$ du second groupe (N2) et de la poussé hydrostatique du second groupe (N2),
- L21 et L22 sont les points latéraux d'appui de la deuxième base (12) sur le fond (3), dans le cas où l'inclinaison se fait selon l'axe longitudinal X-X', avec $y_{L21} > y_{L22}$, la largeur (12b) étant donc supérieure ou égale à la différence $y_{L21}-y_{L22}$.

2. Procédé selon la revendication 1, comprenant une étape supplémentaire (E20') de désolidarisation des deux bases (11, 12), une fois qu'au moins l'une des deux bases (11, 12) est au contact du fond marin (3).

3. Procédé selon l'une des revendications 1 à 2, comprenant une étape (E11) durant laquelle la base (11 ou 12) au contact du fond marin (3) est attachée au fond marin (3) par des moyens d'ancrage.

4. Procédé de retrait d'un fond marin (3) d'un dispositif (1) portant un équipement (2), ledit dispositif (1) comprenant :

- une première et une deuxième bases (11, 12) solidaires entre elles et formant deux espaces de flottaison indépendants, et
- des orifices (14, 14', 15, 15') d'entrées/sorties d'eau/d'air et des moyens de commandes (16) permettant de contrôler les flux d'eau et d'air à l'intérieur des espaces de flottaison,

au moins une des deux bases (11, 12) portant l'équipement (2), le procédé comprenant :

- une étape de vidange (S10) de l'eau contenue dans la première base (11) avec de l'air, la deuxième base (12), en contact avec le fond marin (3), stabilisant le dispositif (1) pendant la remontée de la première base (11) jusqu'à la surface,
- une étape de vidange (S20) de l'eau contenue dans la deuxième base (12) au contact du fond marin (3) avec de l'air, la première base (11) émergée et en flottaison à la surface stabilisant le dispositif (1) pendant la remontée de la deuxième base (12) jusqu'à la surface

dans lequel le dispositif (1) vérifie les conditions suivantes au moment où la deuxième base (12) est au contact du fond marin et la première base (11) commence à émerger:

$$P1 \, [ \, A . \, (z_{G1}-z_{B1}) + (y_{G1}- y_{B1}) \, ] < Pim2 \, (y_{L21} - y_{R2})$$

et

$$P1 \, [ \, A . \, (z_{G1}-z_{B1}) - (y_{G1}-y_{B1}) \, ] < Pim2 \, (y_{R2} - y_{L22})$$

Avec A égal à 0,21 ou encore 0,12 ou encore 0,087 ou encore 0,052, où, pour un repère cartésien direct XYZ et les coordonnées d'un point quelconque M étant notées par $x_M$, $y_M$, $z_M$:

- G1 le centre d'inertie des masses d'un premier groupe (N1) défini par la première base (11), l'équipement (2), et y compris l'eau à l'intérieur de la première base (11), la position de G1 étant corrigée des effets des carènes liquides,

- $\vec{P1}$ le poids émergé du premier groupe (N1) dans l'air, de valeur P1,

- B1 est le centre de poussée hydrostatique du premier groupe (N1),

- R2 est le centre d'application du poids immergé, de valeur Pim2, du second ensemble (N2) défini par la seconde base (12) et son équipement éventuel, c'est-à-dire de la résultante du poids $\vec{P2}$ du second groupe (N2) et de la poussé hydrostatique du second groupe (N2),

- L21 et L22 sont les points latéraux d'appui de la deuxième base 12 sur le fond (3), dans le cas où l'inclinaison se fait selon l'axe longitudinal X-X', avec $y_{L21} > y_{L22}$, la largeur (12b) étant donc supérieure ou égale à la différence $y_{L21}$-$y_{L22}$.

5. Procédé selon l'une quelconque des revendications 1 à 4, dans lequel l'inclinaison du dispositif (1) par rapport à la surface de l'eau ne dépasse pas un angle d'inclinaison maximal prédéterminé, ledit angle maximal étant inférieur à 70°, de préférence inférieur ou égal à 50° pendant l'immersion ou l'émersion des bases (11, 12).

6. Procédé selon l'une des revendications 1 à 5, dans lequel l'équipement (2) est une hydrolienne.

7. Dispositif porteur (1) adapté pour porter au moins un équipement (2) destiné à être déposé sur un fond marin (3), et pour mettre en oeuvre les procédés selon au moins les revendications 1 et 4, comprenant :

- une première base (11), adapté pour porter l'équipement (2), et comprenant une entrée d'eau (14, 14') et une sortie d'air (15, 15') ;
- une deuxième base (12) comprenant un orifice d'entrée d'eau (14, 14') et un orifice de sortie d'air (15, 15') ;
- des moyens de commande (16) pour commander une entrée d'eau à l'intérieur de chacune des bases (11, 12) *via* les orifices d'entrée d'eau (14, 14') et autoriser une sortie d'air *via* les orifices de sortie d'air (15, 15') ; et
- un bras de liaison (13) solidarisant la première base (11) et la deuxième base (12) entre elles,

dans lequel le dispositif (1) comprend des moyens de fixation à rotation (13') entre la première et la deuxième base (11, 12), de manière à autoriser au moins une rotation de la première base (11) par rapport à la deuxième base (12).

8. Dispositif (1) selon la revendication 7, dans lequel chaque base (11, 12) comprend plusieurs sous-compartiments étanches (111, 121) les uns par rapport aux autres.

9. Dispositif (1) selon la revendication 7 ou 8, dans lequel les moyens de fixation (13') comprennent un cardan ou un double cardan.

10. Dispositif (1) selon la revendication 7 ou 8, dans lequel les moyens de fixation comprennent un manchon de fixation en élastomère et dans lequel le bras de liaison présente une extrémité encastrée dans ledit manchon.

11. Dispositif (1) selon l'une des revendications 7 à 10, dans lequel les moyens de fixation à rotation autorisent une rotation de la première base (11) par rapport à la seconde base (12) d'un angle inférieur ou égal à 10° ou 5°.

12. Dispositif (1) selon l'une quelconque des revendications 7 à 11, dans lequel les moyens de commande (16) comprennent des réservoirs d'airs comprimés permettant de vidanger les bases (11, 12).

13. Dispositif (1) selon l'une quelconque des revendications 7 à 12, comprenant des moyens de fixation (131) entre au moins un des deux bases (11, 12) et le bras de liaison (13), dans lequel les moyens de fixation (13) autorisent une désolidarisation des deux bases (11, 12) l'une de l'autre.

14. Dispositif (1) selon l'une quelconque des revendications 7 à 13, dont la longueur totale (la) est comprise entre 30 et 40 mètres et la largeur entre 10 et 20 mètres, de préférence environ 35 et 15 mètres respectivement.

15. Dispositif (1) selon l'une quelconque des revendications 7 à 14, dans lequel chaque compartiment étanche (11, 12, 121, 122) comprend deux orifices de sortie d'eau (14', 14") configurés pour vidanger de l'eau située dans ledit compartiment, lesdits orifice étant disposés chacun au niveau d'une extrémité dudit compartiment, et chaque orifice est relié de façon étanche à un tuyau (14A, 14B) débouchant à l'intérieur du compartiment, à l'extrémité opposée, de façon à faciliter la vidange des compartiments lorsque le dispositif est incliné autour d'un axe normal à la ligne reliant les deux extrémités considérées.

16. Ensemble comprenant un dispositif porteur (1) selon l'une des revendications 9 à 16, et un équipement (2), l'équipement étant une hydrolienne.

**Patentansprüche**

1. Verfahren zum Platzieren auf einem Meeresgrund (3) einer Vorrichtung (1), die mindestens eine Ausrüstung (2) trägt, wobei die Vorrichtung (1) umfasst:

   - eine erste und eine zweite Basis (11, 12), die miteinander fest verbunden sind und zwei unabhängige Schwimmflächen bilden,
   - Wasser-/Luft-Eingangs-/Ausgangsöffnungen (14, 14', 15, 15') und Steuermittel (16), die erlauben, die Wasser- und Luftströme im Inneren der Schwimmflächen zu kontrollieren,

   wobei mindestens eine der zwei Basen (11, 12) die Ausrüstung (2) trägt, wobei das Verfahren umfasst:

   - einen Füllschritt (E10) der zweiten Basis (12) mit Wasser, wobei die aufgetauchte und an der Oberfläche schwimmende erste Basis (11) die Vorrichtung (1) während des Absinkens der zweiten Basis (12) bis zum Kontakt mit dem Meeresgrund (3) stabilisiert,
   - einen Füllschritt (E20) der ersten Basis (11) mit Wasser, wobei die zweite Basis (12) im Kontakt mit dem Meeresgrund (3) ist und die Vorrichtung (1) während des Absinkens der ersten Basis (11) bis auf den Meeresgrund (3) stabilisiert,

   wobei die Vorrichtung (1) die folgenden Bedingungen in dem Moment überprüft, in dem die zweite Basis (12) auf dem Grund aufgestellt ist und die erste Basis (11) vollständig eintaucht:

   $$P1 \ [ \ A. \ (Z_{G1} - Z_{B1}) + (y_{G1} - y_{B1}) \ ] < Pim2 \ (y_{L21} - y_{R2})$$

   und

   $$P1 \ [ \ A. \ (Z_{G1} - Z_{B1}) + (y_{G1} - y_{B1}) \ ] < Pim2 \ (y_{R2} - y_{L22})$$

   mit A gleich 0,21 oder auch 0,12 oder auch 0,087 oder auch 0,052,
   wobei, für eine direkte kartesianische Marke XYZ und die Koordinaten eines beliebigen Punkts M bezeichnet als $x_M$, $y_M$, $z_M$:

   - G1 das Trägheitszentrum der Massen einer ersten Gruppe (N1) ist, definiert durch die erste Basis (11), die Ausrüstung (2) und inbegriffen das Wasser im Inneren der ersten Basis (11), wobei die Position von G1 von den Bilgenwasserwirkungen korrigiert wird,
   - $\overrightarrow{P1}$ das aufgetauchte Gewicht der ersten Gruppe (N1) in der Luft mit dem Wert P1 ist,
   - B1 das Zentrum des hydrostatischen Auftriebs der ersten Gruppe (N1) ist,
   - R2 das Anwendungszentrum des eingetauchten Gewichts mit dem Wert Pim2 der zweiten Gruppe (N2) ist, definiert durch die zweite Basis (12) und ihre eventuelle Ausrüstung, das heißt die Resultierende des Gewichts $\overrightarrow{P2}$ der zweiten Gruppe (N2) und des hydrostatischen Auftriebs der zweiten Gruppe (N2),
   - L21 und L22 die seitlichen Abstützpunkte der zweiten Basis (12) auf dem Grund (3) für den Fall sind, dass die Neigung gemäß der Längsachse X-X' mit $y_{L21} > y_{L22}$ erfolgt, wobei die Breite (12b) demzufolge größer oder gleich der Differenz $y_{L21}$ - $y_{L22}$ ist.

2. Verfahren nach Anspruch 1, umfassend einen zusätzlichen Löseschritt (E20') der zwei Basen (11, 12), sobald mindestens eine der zwei Basen (11, 12) im Kontakt mit dem Meeresgrund (3) ist.

3. Verfahren nach einem der Ansprüche 1 bis 2, umfassend einen Schritt (E11), bei dem die Basis (11 oder 12) im Kontakt mit dem Meeresgrund (3) am Meeresgrund (3) durch Verankerungsmittel befestigt ist.

4. Verfahren zum Entfernen von einem Meeresgrund (3) einer Vorrichtung (1), die eine Ausrüstung (2) trägt, wobei die Vorrichtung (1) umfasst:

- eine erste und eine zweite Basis (11, 12), die miteinander fest verbunden sind und zwei unabhängige Schwimmflächen bilden,
- Wasser-/Luft-Eingangs-/Ausgangsöffnungen (14, 14', 15, 15') und Steuermittel (16), die erlauben, die Wasser- und Luftströme im Inneren der Schwimmflächen zu kontrollieren,

wobei mindestens eine der zwei Basen (11, 12) die Ausrüstung (2) trägt, wobei das Verfahren umfasst:

- einen Ablassschritt (S10) des in der ersten Basis (11) enthaltenen Wassers mit Luft, wobei die zweite Basis (12) im Kontakt mit dem Meeresgrund (3) die Vorrichtung (1) während des Aufsteigens der ersten Basis (11) bis an die Oberfläche stabilisiert,
- einen Ablassschritt (S20) des in der zweiten Basis (12) im Kontakt mit dem Meeresgrund (3) enthaltenen Wassers mit Luft, wobei die aufgetauchte und an der Oberfläche schwimmende erste Basis (11) die Vorrichtung (1) während des Aufsteigens der zweiten Basis (12) bis an die Oberfläche stabilisiert,

wobei die Vorrichtung (1) die folgenden Bedingungen in dem Moment überprüft, in dem die zweite Basis (12) im Kontakt mit dem Meeresgrund ist und die erste Basis (11) aufzutauchen beginnt:

$$P1 \ [ \ A. \ (z_{G1} - z_{B1}) + (y_{G1} - y_{B1}) \ ] < Pim2 \ (y_{L21} - y_{R2})$$

und

$$P1 \ [ \ A. \ (z_{G1} - z_{B1}) + (y_{G1} - y_{B1}) \ ] < Pim2 \ (y_{R2} - y_{L22})$$

mit A gleich 0,21 oder auch 0,12 oder auch 0,087 oder auch 0,052,
wobei, für eine direkte kartesianische Marke XYZ und die Koordinaten eines beliebigen Punkts M bezeichnet als $x_M \ y_M, \ z_M$:

- G1 das Trägheitszentrum der Massen einer ersten Gruppe (N1) ist, definiert durch die erste Basis (11), die Ausrüstung (2) und inbegriffen das Wasser im Inneren der ersten Basis (11), wobei die Position von G1 von den Bilgenwasserwirkungen korrigiert wird,
- $\overrightarrow{P1}$ das aufgetauchte Gewicht der ersten Gruppe (N1) in der Luft mit dem Wert P1 ist,
- B1 das Zentrum des hydrostatischen Auftriebs der ersten Gruppe (N1) ist,
- R2 das Anwendungszentrum des eingetauchten Gewichts mit dem Wert Pim2 der zweiten Gruppe (N2) ist, definiert durch die zweite Basis (12) und ihre eventuelle Ausrüstung, das heißt die Resultierende des Gewichts $\overrightarrow{P2}$ der zweiten Gruppe (N2) und des hydrostatischen Auftriebs der zweiten Gruppe (N2),
- L21 und L22 die seitlichen Abstützpunkte der zweiten Basis (12) auf dem Grund (3) für den Fall sind, dass die Neigung gemäß der Längsachse X-X' mit $y_{L21} > y_{L22}$ erfolgt, wobei die Breite (12b) demzufolge größer oder gleich der Differenz $y_{L21} - y_{L22}$ ist.

5. Verfahren nach einem der Ansprüche 1 bis 4, wobei die Neigung der Vorrichtung (1) in Bezug auf die Oberfläche des Wasser einen vorher festgelegten maximalen Winkel, wobei der maximale Winkel kleiner als 70°, vorzugsweise kleiner oder gleich 50° ist, während des Eintauchens oder des Auftauchens der Basen (11, 12) nicht überschreitet.

6. Verfahren nach einem der Ansprüche 1 bis 5, wobei die Ausrüstung (2) eine Strömungsturbine ist.

7. Tragende Vorrichtung (1), die zum Tragen von mindestens einer Ausrüstung (2) geeignet ist, die zum Abstellen auf einem Meeresgrund (3) und zur Durchführung der Verfahren nach mindestens den Ansprüchen 1 bis 4 bestimmt ist, umfassend:

- eine erste Basis (11), die zum Tragen der Ausrüstung (2) geeignet ist und einen Wassereinlass (14, 14') und einen Luftauslass (15, 15') umfasst;
- eine zweite Basis (12), umfassend eine Wassereinlassöffnung (14, 14') und eine Luftauslassöffnung (15, 15');
- Steuermittel (16), um einen Wassereinlass in das Innere jeder der Basen (11, 12) über die Wassereinlassöffnungen (14, 14') zu steuern und einen Luftauslass über die Luftauslassöffnungen (15, 15') zu gestatten; und
- einen Verbindungsarm (13), der die erste Basis (11) und die zweite Basis (12) fest miteinander verbindet,

wobei die Vorrichtung (1) Rotationsbefestigungsmittel (13') zwischen der ersten und der zweiten Basis (11, 12) derart umfasst, dass mindestens eine Rotation der ersten Basis (11) in Bezug auf die zweite Basis (12) gestattet ist.

8. Vorrichtung (1) nach Anspruch 7, wobei jede Basis (11, 12) mehrere Unterabteile (111, 121) umfasst, die in Bezug zueinander dicht sind.

9. Vorrichtung (1) nach Anspruch 7 oder 8, wobei die Befestigungsmittel (13') einen Kardan oder einen doppelten Kardan umfassen.

10. Vorrichtung (1) nach Anspruch 7 oder 8, wobei die Befestigungsmittel eine Befestigungsmanschette aus Elastomer umfassen und wobei der Verbindungsarm ein in die Manschette eingelassenes Ende aufweist.

11. Vorrichtung (1) nach einem der Ansprüche 7 bis 10, wobei die Rotationsbefestigungsmittel eine Rotation der ersten Basis (11) in Bezug auf die zweite Basis (12) in einem Winkel kleiner oder gleich 10° oder 5° gestatten.

12. Vorrichtung (1) nach einem der Ansprüche 7 bis 11, wobei die Steuermittel (16) Druckluftspeicher umfassen, die erlauben, die Basen (11, 12) zu entleeren.

13. Vorrichtung (1) nach einem der Ansprüche 7 bis 12, umfassend Befestigungsmittel (131) zwischen mindestens einer der zwei Basen (11, 12) und dem Verbindungsarm (13), wobei die Befestigungsmittel (13) ein Lösen der zwei Basen (11, 12) voneinander gestatten.

14. Vorrichtung (1) nach einem der Ansprüche 7 bis 13, deren Gesamtlänge (1a) zwischen 30 und 40 Meter und deren Breite zwischen 10 und 20 Meter beziehungsweise vorzugsweise zirka 35 und 15 Meter beträgt.

15. Vorrichtung (1) nach einem der Ansprüche 7 bis 14, wobei jedes dichte Abteil (11, 12, 121, 122) zwei Wasserauslassöffnungen (14', 14") umfasst, die konfiguriert sind, um das Wasser abzulassen, das sich in dem Abteil befindet, wobei sich die Öffnungen jeweils im Bereich eines Endes des Abteils befinden und jede Öffnung dicht mit einem Rohr (14A, 14B) verbunden ist, das in das Innere des Abteils ausmündet, am entgegengesetzten Ende, um das Entleeren der Abteile zu erleichtern, wenn die Vorrichtung um eine zu der Linie, die die beiden entsprechenden Enden verbindet, normale Achse geneigt ist.

16. Einheit, umfassend eine tragende Vorrichtung (1) nach einem der Ansprüche 9 bis 16 und eine Ausrüstung (2), wobei die Ausrüstung eine Strömungsturbine ist.

**Claims**

1. A method for placing on a seabed (3) a device (1) carrying at least one equipment (2), the device (1) comprising:

   - a first and a second bases (11, 12) secured together and forming two independent flotation spaces,
   - water/air inlet/outlet ports (14, 14', 15, 15') and control means (16) for controlling the water and air flows inside the flotation spaces,

   at least one of the two bases (11, 12) carrying the equipment (2), the method comprising:

   - a step (E10) of filling the second base (12) with water, the first base (11), emerged and floating on the surface, stabilizing the device (1) during the immersion of the second base (12) until contact with the seabed (3),
   - a step (E20) of filling the first base (11) with water, the second base (12) being in contact with the seabed (3) and stabilizing the device (1) during the immersion of the first base (11) to the seabed (3),

   wherein the device (1) satisfies the following conditions, at the moment the second base (12) is landed on the seabed, the first base (11) submerges completely:

$$P1 \; [ \; A. \; (z_{G1} - Z_{B1}) + (y_{G1} - y_{B1}) \; ] < Pim2 \; (y_{L21} - y_{R2})$$

and

$$P1 \; [ \; A. \; (z_{G1} - Z_{B1}) - (y_{G1} - y_{B1}) \; ] < Pim2 \; (y_{R2} - y_{L22})$$

A being equal to 0.21, or 0.12 or 0.087 or 0.052,
where, for a direct Cartesian reference system XYZ and the coordinates of any point M being noted $x_M$, $y_M$, $z_M$:

- G1 is the center of inertia of the masses of a first group (N1) defined by the first base (11), the equipment (2), and including the water inside the first base (11), the position of G1 being corrected for the free surface effects,
- $\vec{P1}$ is the emerged weight of the first group (N1) in the air, of value P1,
- B1 is the hydrostatic thrust center of the first group (N1),
- R2 is the center of application of the immersed weight, of value Pim2, of the second group (N2) defined by the second base (12) and its possible equipment, that is to say the resultant of the weight $\vec{P2}$ of the second group (N2) and of the hydrostatic thrust of the second group (N2),
- L21 and L22 are the lateral bearing points of the second base (12) on the bottom (3), in the case where the inclination occurs along the longitudinal axis X-X', with $y_{L21} > y_{L22}$, the width (12b) being therefore greater than or equal to the difference $y_{L21}$ - $y_{L22}$.

**2.** The method according to claim 1, comprising an additional step (E20') of separating the two bases (11, 12), once at least one of the two bases (11, 12) is in contact with the seabed (3).

**3.** The method according to any of claims 1 to 2, comprising a step (E11) during which the base (11 or 12) in contact with the seabed (3) is attached to the seabed (3) by anchoring means.

**4.** The method for removing from a seabed (3) a device (1) carrying an equipment (2), said device (1) comprising:

- a first and a second bases (11, 12) secured together and forming two independent flotation spaces, and
- water/air inlet/outlet ports (14, 14', 15, 15') and control means (16) for controlling the water and air flows inside the flotation spaces,

at least one of the two bases (11, 12) carrying the equipment (2), the method comprising:

- a step (S10) of draining water contained in the first base (11) with air, the second base (12), in contact with the seabed (3), stabilizing the device (1) during the ascent of the first base (11) to the surface,
- a step (S20) of draining water contained in the second base (12) in contact with the seabed (3) with air, the first base (11), emerged and floating on the surface, stabilizing the device (1) during the ascent of the second base (12) to the surface

wherein the device (1) satisfies the following conditions at the moment the second base (12) is in contact with the seabed and the first base (11) begins to emerge:

$$P1 \; [ \; A. \; (z_{G1} - Z_{B1}) + (y_{G1} - y_{B1}) ] < Pim2 \; (y_{L21} - y_{R2})$$

and

$$P1 \; [ \; A. \; (z_{G1} - Z_{B1}) - (y_{G1} - y_{B1}) ] < Pim2 \; (y_{R2} - y_{L22})$$

A being equal to 0.21, or 0.12 or 0.087 or 0.052,
where, for a direct Cartesian reference system XYZ and the coordinates of any point M being noted $x_M$, $y_M$, $z_M$:

- G1 is the center of inertia of the masses of a first group (N1) defined by the first base (11), the equipment (2), and including the water inside the first base (11), the position of G1 being corrected for the free surface effects,

- $\overrightarrow{P1}$ is the emerged weight of the first group (N1) in the air, of value P1,
- B1 is the hydrostatic thrust center of the first group (N1),
- R2 is the center of application of the immersed weight, of value Pim2, of the second group (N2) defined by the second base (12) and its possible equipment, that is to say the resultant of the weight $\overrightarrow{P2}$ of the second group (N2) and of the hydrostatic thrust of the second group (N2),
- L21 and L22 are the lateral bearing points of the second base (12) on the bottom (3), in the case where the inclination occurs along the longitudinal axis X-X', with $y_{L21} > y_{L22}$, the width (12b) being therefore greater than or equal to the difference $y_{L21} - y_{L22}$.

5. The method according to any one of claims 1 to 4, wherein the inclination of the device (1) with respect to the surface of the water does not exceed a maximum predetermined angle of inclination, said maximum angle being less than 70°, preferably less than or equal to 50° during immersion or emersion of the bases (11, 12).

6. The method according to any of claims 1 to 5, wherein the equipment (2) is a marine turbine.

7. A carrier device (1) adapted to carry at least one equipment (2) intended to be deposited on a seabed (3), and to implement the methods according to at least claims 1 and 4, comprising:

   - a first base (11) adapted to carry the equipment (2), and comprising a water inlet (14, 14') and an air outlet (15, 15');
   - a second base (12) comprising a water inlet port (14, 14') and an air outlet port (15, 15');
   - control means (16) for controlling an entrance of water inside each of the bases (11, 12) via the water inlet ports (14, 14') and allowing an exit of air via the air outlet ports (15, 15'); and
   - a connection arm (13) securing the first base (11) and the second base (12) together,

   wherein the device (1) comprises means for rotational fastening (13') between the first and the second bases (11, 12), so as to allow at least one rotation of the first base (11) relative to the second base (12).

8. The device (1) according to claim 7, wherein each base (11, 12) comprises several sub-compartments (111, 121) sealed relative to each other.

9. The device (1) according to claim 7 or 8, wherein the fastening means (13') comprise a cardan or a double cardan.

10. The device (1) according to claim 7 or 8, wherein the fastening means comprise an elastomer fastening sleeve and wherein the connection arm has an end embedded in said sleeve.

11. The device (1) according to any of claims 7 to 10, wherein the rotational fastening means allow a rotation of the first base (11) relative to the second base (12) by an angle less than or equal to 10° or 5°.

12. The device (1) according to any one of claims 7 to 11, wherein the control means (16) comprise compressed air tanks for draining the bases (11, 12).

13. The device (1) according to any one of claims 7 to 12, comprising fastening means (131) between at least one of the two bases (11, 12) and the connection arm (13), wherein the fastening means (13) allow separation of the two bases (11, 12) from each other.

14. The device (1) according to any one of claims 7 to 13, the total length (1a) of which is comprised between 30 and 40 meters and the width between 10 and 20 meters, preferably about 35 and 15 meters respectively.

15. The device (1) according to any one of claims 7 to 14, wherein each sealed compartment (11, 12, 121, 122) comprises two water outlet ports (14', 14") configured to drain water located in said compartment, said ports being each disposed at an end of said compartment, and each port is sealingly connected to a pipe (14A, 14B) opening into the compartment, at the opposite end, so as to facilitate the drainage of the compartments when the device is tilted about an axis normal to the line connecting the two considered ends.

16. An assembly comprising a carrier device (1) according to any of claims 9 to 16, and an equipment (2), the equipment being a machine turbine.

FIG. 1

EP 3 384 092 B1

**FIG. 2**

50°C

30

1a

EP 3 384 092 B1

E10

**FIG. 3a**

Coulée d'une des deux bases

50

S

2

1

E10

**FIG. 3b**

11

3

12

11

12

EP 3 384 092 B1

**FIG. 3c**

E10

Coulée d'une des deux bases

→

E20

Coulée de l'autre base

**FIG. 3d**

**FIG. 3c'**

**FIG. 3d'**

EP 3 384 092 B1

## FIG. 4a

S10

| Vidange d'une des deux bases |
| --- |

## FIG. 4b

11

12

11

## FIG. 4c

S20

| Vidange de l'autre base |
| --- |

## FIG. 4d

11

12

FIG. 5

FIG. 6a

FIG. 6b

FIG. 6c

FIG. 6d

FIG. 6e

## FIG. 7a

131  13

## FIG. 7b

2

110a

110b

11

13

12

## FIG. 7c

11

13

12

## FIG. 8a

11  13  12

## FIG. 8b

11  12  13

## FIG. 8c

2

13  11  12

## FIG. 9a

## FIG. 9b

EP 3 384 092 B1

**FIG. 9c**

0 à 5°

2

12

**FIG. 9d**

2

12

13

0 à 5°

11

**FIG. 10a**

15  air  11,111,121,122

14'  eau

**FIG. 10b**

15  air  11,111,121,122

14'  air

**FIG. 11a**

15  air  14B  14A  11,111,121,122  14A

14B  14'  eau  14"  eau

**FIG. 11b**

15  air  14A  11,111,121,122

14'  eau  14B  14"

FIG. 12a

FIG. 12b

**FIG. 13**

Z

11   13   12

**FIG. 14**

11   13   12

FIG. 15a

FIG. 15b